(19) Europäisches Patentamt
European Patent Office
Office européen des brevets

(11) **EP 1 844 483 B1**

(12) **FASCICULE DE BREVET EUROPEEN**

(45) Date de publication et mention de la délivrance du brevet:
**27.12.2017 Bulletin 2017/52**

(21) Numéro de dépôt: **06707905.3**

(22) Date de dépôt: **30.01.2006**

(51) Int Cl.:
***H01G 9/00*** *(2006.01)*

(86) Numéro de dépôt international:
**PCT/EP2006/050527**

(87) Numéro de publication internationale:
**WO 2006/082172 (10.08.2006 Gazette 2006/32)**

(54) **ELECTRODE DE SUPERCONDENSATEUR A TAUX DE CHARGES ELEVE ET PROCEDE D'OBTENTION PAR EXTRUSION**

ELEKTRODE FÜR EINEN SUPERKONDENSATOR MIT ERHÖHTER LADUNGSDICHTE UND EIN HERSTELLUNGSVERFAHREN HIERFÜR, DAS STRANGPRESSEN ALS VERFAHRENSSCHRITT UMFASST

HIGH-LOAD RATE SUPERCAPACITOR ELECTRODE AND METHOD FOR OBTAINING SAME BY EXTRUSION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.02.2005 FR 0500971**

(43) Date de publication de la demande:
**17.10.2007 Bulletin 2007/42**

(73) Titulaire: **Blue Solutions
29500 Ergué Gabéric (FR)**

(72) Inventeurs:
• **DREVET, Hélène
  29000 Quimper (FR)**
• **REY, Isabelle
  29000 Quimper (FR)**
• **PEILLET, Michel
  29500 Ergué Gabéric (FR)**
• **ABRIBAT, Frédèric
  29500 Ergué Gabéric (FR)**

(74) Mandataire: **Regimbeau
20, rue de Chazelles
75847 Paris Cedex 17 (FR)**

(56) Documents cités:
EP-A- 0 685 859          EP-A- 0 933 791
FR-A- 2 759 087          US-A1- 2002 054 472
US-A1- 2002 136 887

EP 1 844 483 B1

**Description**

La présente invention concerne le domaine des dispositifs de stockage d'énergie électrique.

Plus précisément, la présente invention s'applique à la réalisation de supercondensateurs constitués d'enroulements ou d'empilements multicouches.

Ces éléments électrochimiques comprennent généralement des couches d'électrodes entre lesquelles est interposée une couche de séparateur, les couches étant imprégnées d'un électrolyte liquide. Des feuilles métalliques adjacentes aux électrodes jouent le rôle de collecteur de courant.

En particulier, la présente invention s'applique à la réalisation d'électrode de supercondensateur déposée sur une feuille de collecteur de courant.

Le document US 2002/0054472 - A (publié le 9 mai 2002) décrit un procédé pour fabriquer une électrode pour un condensateur à double couche électrique. Le procédé consiste à extruder un mélange comprenant un matériau carboné, du PTFE et un additif non plastifiant destiné à lubrifier le polymère pour faciliter l'extrusion (processing aid), à laminer le mélange pour former une feuille et à sécher la feuille pour éliminer l'additif. Dans ce procédé, le mélange extrudé se présente sous forme pâteuse pour former en sortie une feuille auto-supportée. Le procédé nécessite des opérations d'étirage complexes pour permettre de fibriller le PTFE contenu dans le mélange afin d'en obtenir les propriétés mécaniques souhaitables pour un film auto-supporté.

Le document FR 2 759 087 - A (publié le 7 août 1998) décrit un procédé d'extrusion « sans solvant » pour fabriquer des films d'électrodes auto-supportés. Le procédé consiste à former un mélange de polymères et de charges actives carbonées, le mélange contenant des polymères insolubles et un ou plusieurs polymère(s) soluble(s) ou calcinable(s). Le mélange est extrudé, puis on élimine le ou les polymère(s) soluble(s) ou calcinable(s) de façon à former des pores.

Ce procédé conduit à un film d'électrode auto-supporté dont la surface spécifique et la capacité massique sont faibles, ceci en raison de la morphologie continue de l'électrode et du taux de charges limité à 60% par le procédé d'extrusion voie sèche, qui ne permet pas d'extruder des polymères plus lourdement chargés, sous peine de perdre la tenue mécanique du film.

Le document US 2002/0093783 (publié le 18 juillet 2002) décrit un procédé d'obtention d'une structure d'électrode. Le procédé consiste à déposer sur une feuille de collecteur deux couches de carbone incluant une première couche à base de carbone conducteur et une seconde couche à base de charbon actif. Dans ce procédé, chaque couche est déposée successivement par enduction sous la forme d'une pâte contenant un liant polymère solubilisé et du carbone, puis le complexe final est séché.

On connaît par ailleurs des procédés d'enduction pour fabriquer des électrodes de supercondensateurs avec un plastifiant qui est éliminé au cours du procédé de fabrication. On pourra à cet égard se référer aux publications suivantes.

- US 6 327 136
- « An asymmetric Hybrid Nonaqueous Energy Storage Cell », Glenn G. Amatucci et al - Journal of The Electrochemical Society, 148 (8) A930 - A939 (2001)
- « A Nonaqueous Asymmetric Hybrid Li4Ti5O12 / Poly (fluoro phenyl thiophene) Energy Storage Device » Aurélien du Pasquier et al - Journal of The Electrochemical Society, 149 (3) A302 - A306 (2002)

Ces procédés génèrent des produits à matrice continue en raison de l'utilisation de liants polymères dissous dans un solvant, d'où une faible accessibilité des ions aux charges carbonées, une densité faible et une résistance série trop élevée, comme le confirme l'étude "Development and characterization of Ni-C Supercapacitor" de Malmberg, Bursell, Björnbom, et Lundblad, KTH présentée au congrès ESSCAP 2004 Belfort.

Un but de l'invention est de proposer un procédé de fabrication par extrusion-gel d'un film d'électrode déposé sur un collecteur de courant pour former un complexe électrode-collecteur, en présence d'un agent plastifiant porogène liquide, permettant d'augmenter la proportion de charges actives et de créer de la porosité dans l'électrode après élimination totale ou partielle du plastifiant.

Pour ce faire, l'invention prévoit un procédé de fabrication d'un complexe substrat-électrode poreuse à taux de charge supérieur ou égal à 80% pour supercondensateur comprenant au moins les étapes consistant à :

- préparer un mélange contenant au moins un polymère, au moins un agent plastifiant porogène liquide, et au moins une charge active,
- extruder le mélange sous forme de pâte, la pâte étant sous forme de gel possédant un module d'élasticité compris entre $10^4$ et $10^8$ Pascal, aux températures d'extrusion, dans une gamme de fréquences comprises entre 0,01 et 100 Hz,
- déposer la pâte sur le substrat et la laminer,

- traiter le complexe ainsi formé pour éliminer tout ou partie de l'agent plastifiant et créer de la porosité dans l'électrode.

Ce procédé d'extrusion-gel de mise en oeuvre simple ne nécessite pas d'étape de fibrillation du liant, comme l'impose l'utilisation de PTFE selon l'état de l'art.

Nous appelons extrusion-gel le procédé d'extrusion d'un mélange contenant entre autres un polymère et un agent plastifiant liquide de ce polymère permettant la fabrication d'un gel au cours du procédé d'extrusion.

On parle de gel lorsque l'on mélange un liquide et un polymère et que le liquide est un solvant faible du polymère ou que la quantité de liquide présent dans le mélange est insuffisante pour solubiliser complètement le polymère. Une partie du liquide est miscible avec le polymère, et l'autre non. L'agent plastifiant liquide est un composé liquide aux températures de transformation qui présente une miscibilité avec le polymère, telle que le mélange des deux permet de fabriquer un gel. De par sa miscibilité partielle avec le polymère, le liquide joue le rôle d'un plastifiant et permet de diminuer la viscosité du polymère et de le mettre en oeuvre par des procédés nécessitant un écoulement du mélange, tels que les procédés d'extrusion. La faible viscosité du gel permet d'incorporer un taux de charge élevé dans le mélange. La viscosité acceptable par les procédés d'extrusion est cependant plus élevée que pour les procédés d'enduction, ce qui engendre une quantité de plastifiant nécessaire plus faible. Ceci se traduit par une densité du mélange plus forte.

De par sa miscibilité partielle avec le polymère, le liquide est emprisonné à l'intérieur du polymère. Lors de l'élimination du plastifiant liquide, une matrice poreuse est ainsi fabriquée. Par comparaison, un mélange constitué d'un polymère et d'un bon solvant du polymère, comme c'est le cas dans les procédés d'enduction, conduit à la fabrication d'une matrice polymère continue après élimination du solvant.

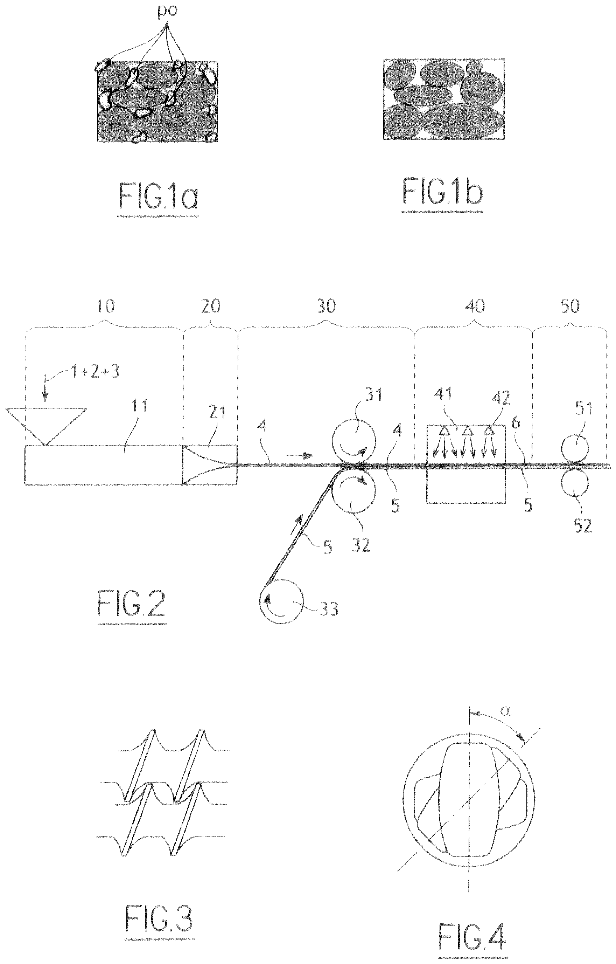

Ceci est illustré par la Figure 1, dans laquelle la figure 1a montre les porosités po créées dans la matrice selon l'invention par élimination du plastifiant liquide, tandis que la figure 1b illustre par comparaison une matrice obtenue par enduction après élimination totale du solvant selon l'état de la technique.

La matrice liante dans le cas de l'enduction est continue autour des grains de charges, alors que la matrice liante dans le cas de l'extrusion gel est dispersée sous forme d'amas de chaînes polymériques entre les grains de charges, libérant ainsi l'accès à une grande surface active.

Un autre but de l'invention est de préparer par extrusion-gel une pâte de réalisation d'une électrode se présentant sous la forme d'un gel et entrant dans la fabrication d'un complexe substrat / électrode pour supercondensateur pour donner à ce dernier des caractéristiques de faible résistance série et de capacité volumique élevée. La finalité consiste donc à déposer la pâte d'électrode sur un substrat de manière à réaliser soit un complexe collecteur / électrode, soit un complexe électrode / collecteur / électrode, soit un complexe séparateur / électrode.

Ainsi, l'invention prévoit de réaliser une pâte d'électrode, pour supercondensateur, à taux de charge compris entre 25% et 45 %, comprenant un mélange contenant au moins un polymère, au moins un agent plastifiant liquide, et au moins une charge active, telle que le taux de plastifiant en masse est compris entre 50 et 70% et que la pâte est sous forme de gel possédant un module d'élasticité compris entre $10^4$ et $10^8$ Pascal, aux températures d'extrusion, dans une gamme de fréquences comprises entre 0,01 et 100 Hz.

Les charges actives désignent du charbon actif, sous forme de poudres ou de fibres.

Le charbon actif est un matériau carboné de grande surface spécifique, entre 500 et 3000 $m^2$/g, fabriquée par activation chimique ou physique de carbone naturel ou synthétique. Dans les applications supercondensateurs, on choisira préférentiellement des charbons actifs de surface spécifique comprise entre 1000 et 2500 $m^2$/g.

Le mélange peut contenir un additif conducteur électronique. Cet additif conducteur électronique, choisi parmi le noir d'acétylène, le noir de carbone ou le graphite, est avantageusement introduit dans le mélange afin de diminuer la résistivité du complexe substrat-électrode. L'électrode peut comprendre une ou plusieurs charges.

Selon une variante d'exécution, les charges peuvent comprendre des oxydes de métaux de transition tels que des oxydes de titane, de ruthénium, de manganèse, de nickel, de molybdène, de tungstène, de cobalt, de chrome, de fer ou de vanadium dans le but de réaliser des électrodes de supercondensateurs hybrides combinant des processus faradiques aux processus capacitifs de création de double-couche électrochimique.

Selon une variante d'exécution, les charges peuvent comprendre des nanotubes de carbone offrant des performances en capacité élevées.

Selon l'invention, le taux de charges dans l'électrode est supérieur ou égal à 80 % en masse, et la teneur en additif conducteur est au moins égale à 5% en masse.

Le ou les polymère(s) joue(nt) le rôle de liant des grains de charges, confère(nt) à l'électrode la cohésion, la souplesse, et participe(nt) à l'adhésion sur le substrat. Il peut être choisi dans la famille des fluoropolymères. Par exemple, le polymère peut être un homopolymère de fluorure de vinylidène (PVDF), ou un copolymère de fluorure de vinylidène et d'hexafluoropropylène (HFP), ou un copolymère de fluorure de vinylidène et trifluorochloroéthylène (CTFE), à hauteur de 50% au plus de monomère HFP ou CFTE copolymérisé avec le fluorure de vinylidène. Il peut également être choisi dans la famille des polyéthers, ou des polyacryliques, tels que les polyoxyéthylènes (POE), polyméthacrylate de méthyle (PMMA), polyacrylonitrile (PAN). Il peut également être choisi dans la famille des élastomères, les copolymères de polyvinyliques, tels que des copolymères de styrène, de butadiène, d'isopropène, et d'acryliques, tels que les élastomères ter-polymères styrène-butadiène-PMMA (SBM) ou les élastomères copolymères styrène-acrylonitrile (SAN). L'électrode peut être constituée d'un polymère cité ou d'un mélange de deux ou plusieurs polymères cités.

Le plastifiant liquide est choisi parmi les carbonates, tels que le carbonate de propylène, le carbonate d'éthylène, ou les lactones, telles que la γ-butyrolactone. Il peut aussi être choisi parmi la N-méthylpyrrolidone (NMP), le tétrahydrofuranne (THF), l'acétone, le cyclohexane, le diméthylformamide (DMF), l'acrylonitrile, le diméthylsulfoxide (DMSO), ou le méthyléthylkétone (MEK). L'électrode peut être constituée à partir d'un ou plusieurs agents plastifiants liquides.

Un autre but de l'invention est de réaliser un complexe collecteur-pâte d'électrode pour supercondensateur, la pâte d'électrode possédant les caractéristiques décrites précédemment. L'agent plastifiant liquide peut être conservé dans la pâte d'électrode pour jouer le rôle de solvant d'électrolyte du supercondensateur.

L'invention concerne également un complexe collecteur-électrode pour supercondensateur dont le collecteur est une feuille métallique, caractérisé en ce que:

- l'électrode, comprend un mélange qui contient au moins un liant polymère à base de polyfluorure de vinylidène (PVDF), sous forme d'homopolymère ou de copolymère seul ou en mélanges, et au moins une charge active, à taux de charge supérieur ou égal à 80%,
- l'électrode est obtenue à partir d'une pâte sous forme de gel possédant un module d'élasticité compris entre $10^4$ et $10^8$ Pascal, aux températures d'extrusion, dans une gamme de fréquences comprises entre 0,01 et 100 Hz,
- l'électrode présente une porosité alvéolaire ayant une surface spécifique supérieure à 400 $m^2$/g et un taux de porosité supérieur à 60% en volume,
- dont le liant polymère de l'électrode est sous forme d'une phase dispersée de morphologie particulaire ou granulaire formant une matrice discontinue.

La finalité consiste:

- à réaliser un empilement optimisé d'une ou plusieurs couches de complexe collecteur-électrode et d'une ou plusieurs couches de séparateur,
- à organiser et à bobiner cet empilement de manière à fabriquer un enroulement,
- à imprégner cet enroulement avec un électrolyte organique liquide,
- à placer cet enroulement imprégné dans un boîtier adapté,
- à réaliser la connectique,

pour obtenir un supercondensateur.

Le substrat constitutif du complexe est un film métallique conducteur jouant le rôle de collecteur de courant. Le métal peut être de l'aluminium. La feuille métallique peut être traitée, mécaniquement ou chimiquement. Ainsi, elle peut être gravée en surface (« etchée » selon l'expression désormais admise et usitée par les spécialistes) ou recouverte d'un dépôt conducteur, qui peut être métallique ou carboné, d'épaisseur comprise entre 0,1 et 25 μm. Ce dépôt constituera une sous-couche pour l'électrode dans le complexe collecteur-électrode.

Dans le cas d'un dépôt métallique, celui-ci sera avantageusement constitué de nitrure ou de carbure métallique dont les propriétés de conduction et anti-corrosion sont favorables aux performances du supercondensateur.

Dans le cas d'une sous-couche carbonée, celle-ci comprendra avantageusement plus de 50% en masse de matériau carboné conducteur afin de réduire la résistance d'interface entre électrode et collecteur.

La sous couche conductrice peut être obtenue par extrusion-gel, par enduction, par pulvérisation ou par évaporation .

La feuille métallique peut être traitée thermiquement pour dégraisser sa surface. L'épaisseur de la feuille métallique collecteur de courant est adaptée pour que le collecteur ait une épaisseur comprise entre 15 et 50 μm.

Le substrat constitutif du complexe peut également être un film séparateur, constitué d'un film poreux en cellulose ou en polymères tels que le polypropylène, le polyfluorure de vinylidène, homopolymère ou copolymère. L'épaisseur du film séparateur est comprise entre 15 et 50 μm.

L'invention permet d'obtenir une électrode de supercondensateur fabriquée par un procédé d'extrusion-gel présentant une morphologie, une perméabilité, une porosité, et une surface spécifique qui améliorent l'accessibilité des ions aux charges actives et réduisent la résistance série des supercondensateurs employant de telles électrodes.

Cette électrode de supercondensateur comprend un additif conducteur dans des proportions telles que la résistance électronique d'interface collecteur-électrode du supercondensateur soit faible.

En outre, cette électrode présente un taux élevé de charges actives et une haute surface spécifique.

Un but de l'invention est de réaliser un complexe électrode - collecteur - électrode dans lequel la seconde face du collecteur est recouverte d'une seconde couche d'électrode de caractéristiques identiques à la couche d'électrode du complexe collecteur-électrode.

La finalité consiste ici:

- à réaliser un empilement optimisé d'une ou plusieurs couches de complexe électrode-collecteur-électrode et d'une ou plusieurs couches de séparateur,
- à organiser et à bobiner cet empilement de manière à fabriquer un enroulement,
- à imprégner cet enroulement avec un électrolyte organique liquide,
- à placer cet enroulement imprégné dans un boîtier adapté,
- à réaliser la connectique,

pour obtenir un supercondensateur.

La présente invention concerne également un complexe collecteur-électrode pour supercondensateur, dont le collecteur est un film d'aluminium pur, etché ou non, dont l'électrode contient au moins 70% de charbon actif, et au moins un liant à base de fluoropolymère, et dont l'électrode comporte au moins 5% en masse d'additif conducteur.

Enfin, l'invention permet de réaliser des supercondensateurs qui comportent au moins un complexe calandré électrode-collecteur-électrode dont chaque électrode est déposée puis laminée sur un film collecteur métallique, et dont:

- chaque électrode, comprend un mélange qui contient au moins un liant polymère à base de polyfluorure de vinylidène (PVDF), sous forme d'homopolymère ou de copolymère seul ou en mélange, et au moins une charge active, à taux de charge supérieur ou égal à 80%,
- l'électrode est obtenue à partir d'une pâte sous forme de gel possédant un module d'élasticité compris entre $10^4$ et $10^8$ Pascal, aux températures d'extrusion, dans une gamme de fréquences comprises entre 0,01 et 100 Hz,
- l'électrode présente une porosité alvéolaire ayant une surface spécifique supérieure à 400 $m^2/g$ et un taux de porosité supérieur à 60% en volume,
- le liant polymère des électrodes est sous forme d'une phase dispersée de morphologie particulaire ou granulaire formant une matrice discontinue,
- le collecteur est un film métallique d'épaisseur comprise entre 15 et 50 $\mu$m.

D'autres caractéristiques et avantages ressortiront encore de la description qui suit, laquelle est purement illustrative et non limitative et doit être lue en regard des figures annexées, parmi lesquelles :

- la figure 1a montre de manière schématique les porosités créées dans la matrice selon la présente invention lors d'un procédé d'extrusion-gel par élimination du plastifiant liquide, tandis que la figure 1 b illustre de manière schématique par comparaison une matrice obtenue par enduction après élimination totale du solvant selon l'état de la technique.
- la figure 2 illustre de manière schématique un procédé de fabrication d'un film d'électrode poreux conforme à un mode de mise en oeuvre possible de l'invention.
- les figures 3 et 4 illustrent de manière schématique la disposition des éléments de vis dans une extrudeuse bivis corotative modulaire.
- la figure 5 illustre de manière schématique l'effet d'un malaxage dispersif.
- la figure 6 illustre de manière schématique l'effet d'un malaxage distributif.
- la figure 7a représente de manière schématique en vue de dessus une portion d'un complexe comprenant une feuille de collecteur et un film d'électrode, le collecteur débordant l'électrode sur un bord.
- la figure 7b représente de manière schématique en vue de dessus une portion d'un complexe comprenant une feuille de collecteur et un film d'électrode, le collecteur débordant l'électrode de chaque côté.
- la figure 8 illustre de manière schématique une racle permettant de former le complexe avec le collecteur débordant l'électrode sur un bord.
- la figure 9 illustre de manière schématique des flasques disposées sur des rouleaux de laminage permettant de former un complexe avec le collecteur débordant l'électrode sur un bord.
- la figure 10 est un diagramme illustrant de manière schématique les étapes du procédé de fabrication du film d'électrode poreux.
- la figure 11 représente de manière schématique des points d'introduction de différents constituants dans l'extrudeuse bivis, conforme à un premier mode de mise en oeuvre.
- la figure 12 représente de manière schématique des points d'introduction de différents constituants dans l'extrudeuse bivis, conforme à un deuxième mode de mise en oeuvre.
- la figure 13 illustre la morphologie d'une électrode conforme à la présente invention obtenue par extrusion-gel.
- la figure 14 illustre la morphologie d'une électrode conforme à l'état de la technique obtenue par extrusion voie sèche.
- la figure 15 illustre la morphologie d'une électrode conforme à l'état de la technique obtenue par extrusion calandrage en voie PTFE avec fibrillation.
- la figure 16 présente les résultats de la caractérisation rhéologique de la pâte d'électrode réalisée.

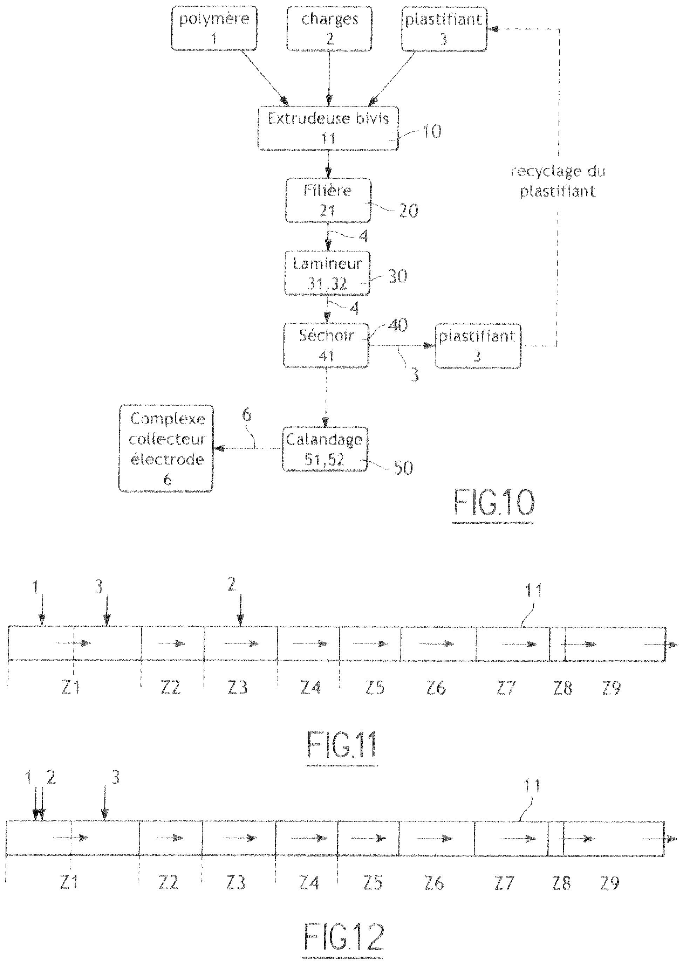

Comme on peut le voir sur les figures 2 et 10, le procédé de fabrication d'un film d'électrode poreux comprend les étapes principales suivantes.

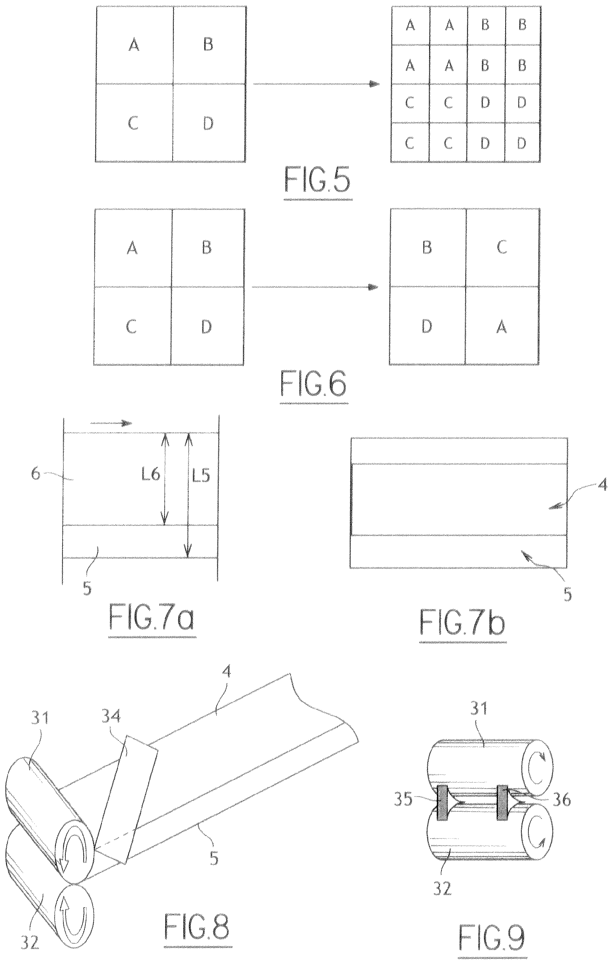

Selon une première étape 10, on introduit dans une extrudeuse bivis 11 un liant polymère 1 sous forme de poudre, un agent plastifiant 2 sous forme liquide et une ou plusieurs charge(s) 3 sous forme de poudres ou de fibres. Les constituants sont mélangés, malaxés au cours de leur parcours dans l'extrudeuse 11 de manière à plastifier le liant polymère en présence du plastifiant. Les charges sont dispersées au cours du parcours dans l'extrudeuse 11 de manière à ce que le mélange soit rendu homogène. Ceci est effectué par le choix de la succession des éléments de vis, certaines sections de vis ayant une fonction dispersive telle que schématisée à la figure 5 et d'autres une fonction distributive telle que montrée à la figure 6.

Selon une deuxième étape 20, le mélange, ou pâte sort de l'extrudeuse 11 à travers une filière plate 21 (ou jonc, ou de section oblongue). Le passage du mélange dans la filière 21 conduit à l'obtention d'un extrudât 4 régulier et homogène sous la forme d'un gel.

L'extrudeuse bivis peut avantageusement être remplacée par un malaxeur continu, du type de l'équipement commercialisé sous la marque Ko-malaxeur® Buss ou du type de l'équipement commercialisé sous la marque Malaxeur continu Readco. Le Ko-malaxeur® Buss est constitué d'une seule vis au filet de vis interrompu en trois endroits formant ainsi des ailettes. Un mouvement de rotation combiné à un mouvement de translation en aller-retour est imprimé à la vis. A l'intérieur du fourreau de la vis, trois rangées de dents fixes génèrent au cours du mouvement des forces de cisaillement avec les ailettes. Le Malaxeur continu Readco est constitué de deux arbres co-rotatifs équipés de palettes autonettoyantes, générant au cours du mouvement des forces de cisaillement. L'avantage de ces équipements est d'offrir un volume libre plus grand que dans une bivis corotative classique, et ainsi d'offrir une capacité d'incorporation de charges plus élevée. Les forces de cisaillement sont également mieux réparties et plus faibles, ce qui devient intéressant lorsqu'on doit travailler avec des produits thermo-mécaniquement sensibles.

Par exemple, une filière jonc présentant un diamètre de 15 mm permet la fabrication d'un film d'électrode de laize comprise entre 45 et 80 mm, d'épaisseur sensiblement égale à 150 ± 10 $\mu$m, avec un extrudât comprenant environ 80 ± 1% en poids de matière sèche de charbon actif d'origine naturelle, activé physiquement, présentant une surface spécifique comprise entre 1000 et 2500 $m^2$/g, environ 20% en poids de matière sèche de copolymère de polyfluorure de vinylidène et de hexafluoropropylène (PVDF/HFP) fourni par la société Solvay sous la référence Solef® 21216 et environ 50 à 60% en poids de carbonate de propylène.

Selon une troisième étape 30, l'extrudât 4 est entraîné en défilement entre deux rouleaux de laminage 31 et 32 d'un lamineur. L'extrudât 4 est laminé sur une feuille de collecteur métallique 5 entre les deux rouleaux de laminage 31 et 32 chauffés.

Les rouleaux de laminage 31 et 32 ont pour fonction d'étaler l'extrudât 4 sur la feuille de collecteur 5 et de faire adhérer la couche d'extrudât 4 à la feuille de collecteur 5. Cette troisième étape 30 conduit à la formation d'un complexe comprenant une couche d'extrudât 4 et une couche de collecteur 5.

Selon une quatrième étape 40, le complexe est entraîné en défilement dans une enceinte de séchage 41 et soumis à une source de chaleur. A cet effet, l'enceinte de séchage 41 est munie de sources 42 destinées à émettre un rayonnement infrarouge vers le complexe.

Alternativement, cette quatrième étape 40 de séchage peut être réalisée par convexion d'air chaud éventuellement sec, ou par conduction en faisant défiler le complexe sur des rouleaux chauffants.

Par ailleurs, cette quatrième étape 40 de séchage peut être réalisée sous vide, sous atmosphère neutre telle que l'azote ou l'argon, ou en atmosphère ambiante.

Cette quatrième étape 40 de séchage conduit à l'évaporation de tout ou partie de l'agent plastifiant contenu dans la couche d'extrudât 4 et entraîne la solidification de la couche d'extrudât 4. L'agent plastifiant éliminé par évaporation laisse place à des pores dans la couche d'extrudât 4. L'étape d'évaporation 40 permet de transformer la couche d'extrudât 4 en un film d'électrode poreux 6.

De préférence, comme on le voit sur la figure 10, l'agent plastifiant récupéré en sortie du système d'évaporation 40 est recyclé en entrée de l'extrudeuse bivis 11.

Par exemple, on peut provoquer sur une longueur de 15 m l'évaporation d'environ 70% à 100% de l'agent plastifiant contenu dans une couche d'extrudât 4 présentant une laize égale à 120 mm et une épaisseur égale à 150 $\mu$m, la couche d'extrudât 4 comprenant 60% en poids d'agent plastifiant. A cet effet, le complexe est entraîné en défilement dans une enceinte dont les trois premiers mètres sont munis de moyens de préchauffage par rayonnement infrarouge permettant de chauffer le complexe à 200°C et les douze mètres qui suivent sont munis de moyens de convexion sous air chaud permettant de chauffer le complexe à 170°C.

Alternativement, il est possible d'extraire le plastifiant par voie solvant, par immersion du complexe dans un composé liquide miscible avec le plastifiant mais mauvais solvant du liant polymère, puis séchage pour évaporer le solvant du plastifiant. Par exemple, on peut utiliser le diéthyl ou diméthyl éther pour extraire le carbonate de propylène utilisé comme plastifiant du polyfluorure de vinylidène.

Selon une cinquième étape 50, le complexe comprenant la couche de collecteur 5 et la couche d'électrode 6 peut être entraîné en défilement entre deux rouleaux de calandrage 51 et 52 chauffants ou non. Cette cinquième étape 50 permet de densifier le film d'électrode 6 et d'optimiser le contact entre les charges actives, les additifs conducteurs et le collecteur, ce qui permet de diminuer les résistances d'interface.

Selon une variante, le procédé peut comprendre une étape intermédiaire entre la première étape 10 et la deuxième étape 20, l'étape intermédiaire consistant à fabriquer des granulés à partir de l'extrudât issu de la bivis 11 et d'alimenter en granulés une extrudeuse monovis équipée d'une filière plate ou jonc.

Les dimensions de l'extrudât 4 sont choisies pour que le film d'électrode 6 présente les dimensions suivantes : une laize comprise entre 40 et 120 mm et une épaisseur comprise entre 80 et 200 $\mu$m.

Le substrat sur lequel est déposée l'électrode est un film métallique collecteur, de préférence en aluminium.

Selon un mode de réalisation de l'invention, on pourra déposer la pâte d'électrode sur chaque face d'un collecteur en aluminium afin de réaliser un complexe électrode-collecteur-électrode. De préférence, on utilisera un film d'aluminium etché afin d'améliorer l'adhésion de l'électrode sur le collecteur.

Selon une variante de l'invention, on pourra déposer la pâte d'électrode sur un film séparateur afin de réaliser un complexe électrode-séparateur.

Selon une alternative, l'étape de calandrage peut être réalisée après une première étape de séchage partiel. Ainsi, le liant polymère demeure légèrement plastifié et mou favorisant ainsi la densification.

Une extrudeuse bivis 11 est formée par l'association de tronçons modulaires, chaque tronçon modulaire comprenant des éléments de vis et un fourreau. Les tronçons modulaires peuvent être interchangés pour modifier le profil de l'extrudeuse.

Les éléments de vis z1 à z9 peuvent être des éléments de transport ou des éléments de malaxage.

La figure 3 représente de manière schématique un élément de transport. Un tel élément de transport comprend deux vis hélicoïdales de transport disposées côte à côte et aptes à être entraînées en rotation autour d'axes parallèles entre eux s'étendant dans la direction d'avancement de la matière. Les vis hélicoïdales permettent le convoyage des matières le long des vis et génèrent un faible cisaillement de la matière.

La figure 4 représente de manière schématique un élément de malaxage. Un tel élément de malaxage comprend des palettes de malaxage aptes à être entraînées en rotation autour d'un axe de rotation commun s'étendant dans la direction d'avancement de la matière. Les palettes de malaxage induisent un cisaillement élevé de la matière et permettent ainsi le mélange de la matière et une dispersion des charges actives dans la matière. Les palettes présentent une épaisseur E et sont disposées le long de l'axe de rotation en formant un angle prédéterminé $\alpha$ entre deux palettes successives. Les paramètres E et $\alpha$ peuvent être choisis pour obtenir une action de mélange dispersif ou distributif de la matière.

Par exemple, si l'épaisseur E des palettes est élevée ou si $\alpha$ est proche de 45°, on obtiendra un effet dispersif.

Au contraire si $\alpha$ est proche de 90°, on obtiendra un effet distributif.

La figure 5 représente de manière schématique l'effet d'un mélange dispersif de la matière. On remarque que la section de matière est modifiée de sorte que chaque flux de matière A, B, C, D est divisé en flux de section plus faible

La figure 6 représente de manière schématique l'effet d'un mélange distributif de la matière. On remarque que la section de matière est modifiée de sorte que les portions A, B, C et D sont mélangées entre elles.

Selon une première mise en oeuvre représentée sur la figure 11, le polymère 1 en poudre et l'agent plastifiant 3 sous forme liquide sont introduits dans l'extrudeuse bivis 11 dans la première zone de l'extrudeuse et les charges 2 sont introduites sous forme de poudre dans une zone aval.

Cette première mise en oeuvre privilégie la plastification du polymère puisque l'agent plastifiant est d'abord mélangé avec le polymère avant d'être absorbé par les charges.

De manière optionnelle, pour obtenir un débit régulier, les charges 2 peuvent être introduites dans l'extrudeuse 11 grâce à une gaveuse latérale.

Selon une deuxième mise en oeuvre représentée sur la figure 12, le polymère 1 et les charges 2 sous forme de poudres ainsi que le plastifiant 3 sous forme liquide sont introduits dans la première zone de l'extrudeuse.

Cette deuxième mise en oeuvre permet de réaliser un mélange intime entre le polymère 1 et les charges 2 puisqu'il s'agit d'un mélange entre deux constituants pulvérulents.

Pour favoriser l'action de l'agent plastifiant, on réalise un apport en énergie thermique. Les températures d'extrusion sont choisies en fonction du couple polymère / agent plastifiant choisi.

La vitesse de rotation des vis de la bivis 11 est choisie pour obtenir une qualité de dispersion et de mélange optimale ainsi qu'un débit optimal.

En sortie de l'extrudeuse, on a ainsi réalisé une pâte d'électrode pour supercondensateur, à taux de charge compris entre 25% et 45 %, comprenant un mélange sous forme de gel contenant au moins un polymère, au moins un agent plastifiant liquide, et au moins une charge active, dont le taux de plastifiant en masse est compris entre 50 et 70%.

La charge active de la pâte peut être du charbon actif ou comporter des oxydes de métaux de transition ou des nanotubes de carbone. Elle peut se présenter sous forme de poudres ou de fibres.

La pâte contient un additif conducteur présent à environ 1,5% en masse à ce stade de fabrication, l'additif étant choisi parmi le noir d'acétylène, le noir de carbone ou le graphite ou un mélange de ces composés.

L'agent plastifiant liquide est choisi dans la famille des carbonates, par exemple parmi le carbonate d'éthylène ou le carbonate de propylène, ou dans la famille des lactones comme la γ-butyrolactone (GBT). Il peut aussi être choisi parmi la N-methylpyrrolidone (NMP), le tétrahydrofurane (THF), l'acétone, le cyclohexane, le diméthylformamide (DMF), l'acrylonitrile, le diméthylsulfoxide (DMSO), ou le méthyléthylkétone (MEK). L'électrode peut être constituée à partir d'un ou plusieurs agents plastifiants liquides.

Les figures 7a et 7b illustrent de manière schématique une portion d'un complexe comprenant une feuille de collecteur 5 et un film d'électrode 6. La feuille de collecteur 5 comprend une portion qui déborde d'un côté du film d'électrode 6 (figure 7a) ou des deux côtés du film d'électrode (figure 7b). A cet effet, la feuille de collecteur 5 présente une laize L5 supérieure à la laize L6 du film d'électrode 6.

Dans le cas où le collecteur déborde l'électrode des deux cotés, le complexe sera par la suite découpé dans le sens de la longueur afin de réaliser deux complexes comme décrits dans la figure 7b.

La figure 8 illustre de manière schématique une première solution permettant de former un complexe dans lequel la feuille de collecteur 5 déborde de la largeur de l'électrode 6.

Selon cette première solution, une racle 34 est disposée à proximité des rouleaux de laminage 31 et 32. La racle 34 est disposée en sortie des rouleaux de laminage 31 et 32. La racle 34 présente une arête en contact avec la feuille de collecteur 5 et s'étendant perpendiculairement à la direction de défilement du complexe comprenant la couche de collecteur 5 et la couche d'extrudât 4, sur une portion latérale de la feuille de collecteur 5. La racle 34 a pour fonction d'éliminer l'extrudât 4 sous forme de gel sur une portion de la feuille de collecteur 5 pour former une portion de collecteur dépourvue d'extrudât.

La figure 9 illustre de manière schématique une deuxième solution permettant également de former un film d'électrode 6 en retrait par rapport à la feuille de collecteur 5.

Selon cette deuxième solution, deux flasques 35, 36 sont disposées en forme de coin entre les rouleaux de laminage 31 et 32. Les flasques 35, 36 permettent de limiter l'étalement de l'extrudât 4 sur la feuille de collecteur 5 et définissent la laize de la couche d'extrudât 4 laminée.

De manière avantageuse, les rouleaux de laminage 31 et 32 peuvent être chauffés de manière à favoriser le laminage de l'extrudât plastifié 4.

Dans les exemples décrits ci-dessous, les caractéristiques électrochimiques sont mesurées d'après le mode opératoire suivant :

Les complexes collecteur-électrode sont découpés à l'emporte-pièce à un diamètre de 30mm et les différents constituants, deux complexes collecteur-électrode, un séparateur papier de 65 μm d'épaisseur, nécessaires à la fabrication du supercondensateur sont empilés de manière symétrique.

L'assemblage ainsi réalisé est ensuite imprégné par l'électrolyte organique liquide choisi et placé dans une cellule de test électrochimique adaptée. Dans notre cas, il s'agit du mélange γ-Butyrolactone - TétraEthylAmmonium-TétraFluoroBorate concentré à 1 M.

La cellule est ensuite testée à 25°C en cyclage intentiostatique de charge - décharge sous une densité de courant de 8,5 mA/cm$^2$. L'évolution du potentiel aux bornes du dispositif est mesuré au cours du temps et en fonction des différentes polarisations.

Les deux paramètres majeurs que sont la capacité et la résistance série sont directement mesurés à partir des courbes de cyclage du supercondensateur:

- la résistance série (ohm) est mesurée à partir de la chute ohmique en début de décharge :

$$R_s = \Delta U / 2 I_{\text{décharge}}$$

- la capacité (F) est calculée à partir de la pente $\Delta U / \Delta t$ de la courbe de variation du potentiel au cours du temps et du courant de décharge imposé :

$$C = I_{\text{décharge}} (\Delta t / \Delta U)$$

La capacité massique (F/g) est obtenue en divisant la capacité mesurée sur la cellule considérée par la masse totale des deux électrodes utilisées pour constituer la cellule.

La résistance série surfacique (ohm.cm$^2$) est obtenue en multipliant la résistance série mesurée par la surface active de la cellule.

La conductivité électrique dans le sens de l'épaisseur est mesurée d'après le mode opératoire suivant :

Les électrodes sont découpées à l'emporte-pièce à un diamètre de 18mm. Les deux faces de l'échantillon sont laquées en utilisant une suspension d'argent. Un fil de cuivre est fixé sur chacune des faces afin de relier l'échantillon à l'appareil de mesure.

Des courants 1 sont appliqués au travers de l'échantillon et les tensions résultantes U sont relevées.

La conductivité du film est obtenue par la formule suivante:

$$\sigma = \frac{I \times L}{U \times S}$$

Avec :

$\sigma$ la conductivité en Siemens par cm
I le courant imposé en Ampère
U la tension mesurée en volt
L l'épaisseur du film en cm
S la surface de conduction c'est à dire la surface laquée en cm$^2$

La perméabilité au gaz des électrodes nous permet d'appréhender la facilité de pénétration du matériau par un gaz. Elle est mesurée d'après le mode opératoire suivant, sur un échantillon d'électrode carré de 2 cm de coté. Le gaz choisi est le diazote. La perméabilité est calculée grâce à la loi de Darcy.

Il s'agit pour ces mesures, de relever la pression d'entrée du gaz ($P_e$), la différence de pression de sortie / à la pression d'entrée ($\Delta P$) à l'aide d'un manomètre différentiel et le débit du gaz (Q) lorsque le gaz traverse l'échantillon.

La loi suivante tenant compte de la compressibilité du gaz nous permet de calculer la perméabilité :

$$k = \frac{Q \times e \times \eta \times (2(Pe - \Delta P))}{S \times ((Pe - \Delta P)^2 - Pe^2)}$$

avec :

k = perméabilité intrinsèque du film (m$^2$)
Q = le débit (mL/min)
e = épaisseur de l'échantillon (cm)
$\eta$ = la viscosité du fluide (Pa.s)
Pe = la pression d'entrée du Gaz (Pa)
$\Delta P$ = la différence de pression lorsque le gaz traverse l'échantillon (Pa)
S = la surface de l'échantillon exposée au gaz (cm$^2$)

La surface BET de l'électrode est la surface spécifique évaluée par la mesure BET telle que décrite par exemple dans la publication Technique de l'Ingénieur Pbis 45-1 (Etude de structure - mesure de surface spécifique) - Jean Charpin et Bernard Rasneur.

EXEMPLE 1

On forme des films de complexe collecteur-électrode, dont les électrodes sont obtenues en mélangeant un polymère, un agent plastifiant et une charge active. Les mélanges se présentent sous forme de gel et sont extrudés par une extrudeuse bivis à travers une filière jonc de diamètre 4mm. Les extrudâts ainsi formés sont déposés sur le collecteur par laminage. Les complexes collecteur-pâte sont séchés pour former les complexes collecteur-électrode.

Le polymère est choisi parmi les composés suivants : le polyfluorure de vinylidène (PVDF), le copolymère de polyfluorure de vinylidène et d'hexafluoropropylène (PVDF/HFP), l'élastomère styrène butadiène méthacrylate de méthyle (SBM), le polyméthacrylate de méthyle (PMMA).

L'agent plastifiant est choisi parmi les composés suivants : le carbonate de propylène, un mélange de carbonate d'éthylène (50% en poids) et de carbonate de propylène (50% en poids), ou de la $\gamma$-butyrolactone (GBT).

La charge active est constituée d'un charbon actif naturel activé physiquement, présentant une surface spécifique comprise entre 1000 $m^2$/g et 1200 $m^2$/g.

Le collecteur est une feuille d'aluminium traitée d'épaisseur 30$\mu$m.

Les électrodes obtenues contiennent 80% en poids ($\pm$1%) de charges actives et ont 150 $\mu$m d'épaisseur.

En fonction de la nature du liant et du plastifiant utilisé, on obtient les résultats regroupés dans le tableau 1.

EXEMPLE 2

On forme des films de complexe collecteur-électrode, dont les électrodes sont obtenues en mélangeant un polymère, un agent plastifiant et une charge active. Les mélanges se présentent sous forme de gel et sont extrudés par une extrudeuse bivis à travers une filière jonc de diamètre 4mm. Les extrudâts ainsi formés sont déposés sur le collecteur par laminage. Les complexes collecteur-pâte sont séchés pour former les complexes collecteur-électrode.

Le liant polymère est un copolymère de polyfluorure de vinylidène et d'hexafluoropropylène (PVDF/HFP) fourni par la société SOLVAY sous la référence SOLEF® 21216/1001

L'agent plastifiant est du carbonate de propylène (PC).

La charge active est constituée d'un charbon actif naturel activé physiquement, présentant une surface spécifique comprise entre 1000 $m^2$/g et 1200 $m^2$/g.

Le collecteur est une feuille d'aluminium traitée d'épaisseur 30$\mu$m.

On fait varier le taux de charges, le taux de liant et par conséquent le taux de plastifiant nécessaire à la mise en oeuvre des différentes électrodes.

Le tableau 2 résume l'ensemble des caractéristiques mesurées sur ces différentes électrodes de 150 $\mu$m d'épaisseur.

EXEMPLE 3

Dans les exemples suivants, différentes morphologies et caractéristiques d'électrode sont obtenues en fonction du choix de la technologie de mise en oeuvre.

Exemple 3a : voie extrusion-gel

On forme un film de complexe collecteur-électrode, dont l'électrode est obtenue en mélangeant un polymère, un agent plastifiant et une charge active. Le mélange se présente sous forme de gel et est extrudé par une extrudeuse bivis à travers une filière jonc de diamètre 4mm. L'extrudât ainsi formé est déposé sur le collecteur par laminage. Le complexe collecteur-pâte est séché pour former le complexe collecteur-électrode.

Le liant polymère est un copolymère de polyfluorure de vinylidène et d'hexafluoropropylène (PVDF/HFP) fourni par la société SOLVAY sous la référence SOLEF® 21216/1001

L'agent plastifiant est du carbonate de propylène (PC).

La charge active est constituée d'un charbon actif naturel activé physiquement, présentant une surface spécifique comprise entre 1000 $m^2$/g et 1200 $m^2$/g.

Le collecteur est une feuille d'aluminium traitée d'épaisseur 30$\mu$m.

L'électrode obtenue contient 80% en poids de charges actives et possède une épaisseur de 150 $\mu$m.

Exemple 3b : voie extrusion sèche

On forme une électrode en mélangeant plusieurs polymères et une charge active.

Le premier polymère est le polyoxyde d'éthylène de chez DOW CHEMICAL (POE 200 M). Le second polymère est un polyoxyde d'éthylène glycol de chez DOW CHEMICAL (PEG 8 M). Ces polymères sont choisis pour leur propriété de solubilité dans l'eau.

Le liant polymère est un copolymère de polyfluorure de vinylidène et d'hexafluoropropylène (PVDF/HFP) fourni par la société SOLVAY sous la référence SOLEF® 21510.

La charge active est constituée d'un charbon actif naturel activé physiquement, présentant une surface spécifique comprise entre 1000 $m^2$/g et 1200 $m^2$/g.

Le mélange est extrudé par une extrudeuse bivis corotative à travers une filière jonc de diamètre 4mm. Les granulés obtenus sont introduits dans une monovis de longueur 30D pour l'obtention d'un film de 100 $\mu$m d'épaisseur. Enfin, la dernière étape consiste à plonger le film dans un bain d'eau à 60°C pendant 5 minutes pour extraire une partie du polymère hydrosoluble . Le film est ensuite séché à 80°C pendant 24H.

EP 1 844 483 B1

Les proportions massiques finales des constituants dans l'électrode sont les suivantes :

- ✔ Charbon actif : 49%
- ✔ POE 200M : 16%
- ✔ PEG 8M :13%
- ✔ PVDF 21510: 22%

Exemple 3c : voie PTFE

On forme une électrode en mélangeant un polymère et une charge active.

La charge active (98% en masse du mélange) est mise en suspension dans de l'éthanol en excès. Le PTFE (2% en masse du mélange) est ensuite ajouté à la suspension. La suspension est chauffée à 75°C de manière à évaporer l'éthanol. La pâte visqueuse ainsi obtenue est ensuite malaxée sur un support plan puis étirée à l'aide d'un rouleau comme une pâte feuilletée jusqu'à obtention d'un film autosupporté. Ce film est ensuite séché à 80°C pendant 1H.

Le tableau 3 présente les caractéristiques comparées des électrodes obtenues avec les différentes technologies précédemment décrites.

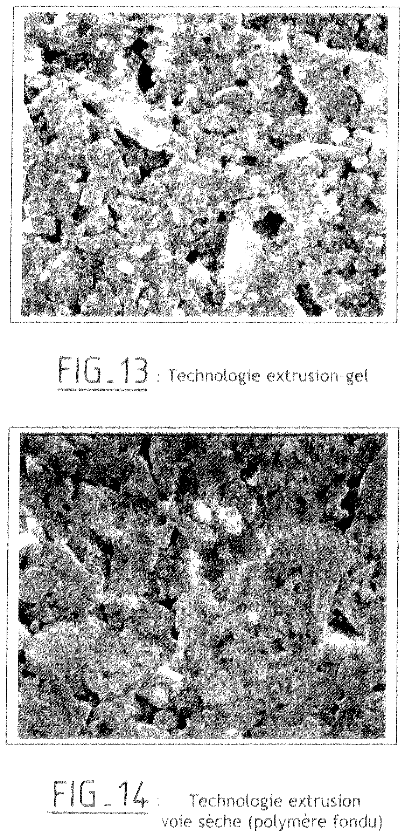

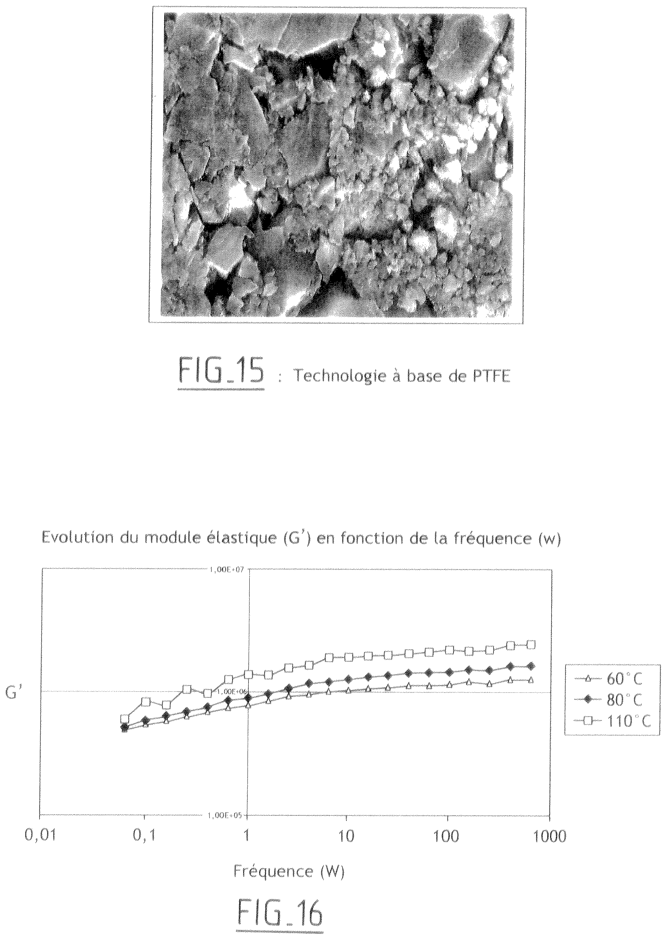

D'autre part, des photographies MEB des films précédemment décrits ont été réalisées Ainsi, la morphologie de l'électrode obtenue dans le cadre de la présente invention, par voie extrusion-gel (Figure 13), est comparée à celles obtenues dans le cas d'une électrode classique issue d'une extrusion voie sèche (Figure 14) et dans le cas d'une électrode classique fabriquée en laboratoire et à base de PTFE (Figure 15). Ces photographies soulignent des différences de morphologies notables générées par ces technologies :

- Avec une technologie extrusion-gel conforme à la présente invention, l'électrode obtenue possède une porosité importante. Le liant polymère est sous forme d'une phase dispersée de morphologie particulaire ou granulaire formant une matrice discontinue.
- Dans le cas de la technologie voie sèche selon l'état de la technique, l'électrode obtenue est nettement moins poreuse. Le liant polymère est sous forme d'une matrice continue.
- Dans le cas de la technologie PTFE selon l'état de la technique, le liant polymère est sous forme d'une matrice fibrillée.

EXEMPLE 4

On forme un film de complexe collecteur-électrode, dont l'électrode est obtenue en mélangeant un polymère, un agent plastifiant et une charge active. Le mélange se présente sous forme de gel et est extrudé par une extrudeuse bivis à travers une filière jonc de diamètre 4mm. L'extrudât ainsi formé est déposé sur le collecteur par laminage. Le complexe collecteur-pâte est séché pour former le complexe collecteur-électrode.

Le liant polymère est un copolymère de polyfluorure de vinylidène et d'hexafluoropropylène (PVDF/HFP) fourni par la société ATOFINA sous la référence KYNAR®FLEX 2821 à 20% en masse d'électrode.

L'agent plastifiant est du carbonate de propylène (PC) à 56% en masse de mélange.

La charge active est constituée d'un charbon actif naturel activé physiquement, présentant une surface spécifique comprise entre 1000 $m^2/g$ et 1200 $m^2/g$.

Le collecteur est une feuille d'aluminium traitée d'épaisseur 30 $\mu$m.

On obtient un film d'électrode contenant 80% en poids de charges et qui possède les caractéristiques suivantes :

- une capacité massique de 37.1 F/g,
- une résistance série de 8.0 Ohm.$cm^2$,
- une densité de 0.60,
- une porosité de 70%.

EXEMPLE 5

On forme un film de complexe collecteur-électrode, dont l'électrode est obtenue en mélangeant un polymère, un agent plastifiant et une charge active. Le mélange se présente sous forme de gel et est extrudé par une extrudeuse bivis à travers une filière jonc de diamètre 4mm. L'extrudât ainsi formé est déposé sur le collecteur par laminage. Le complexe collecteur-pâte est séché pour former le complexe collecteur-électrode.

Le liant polymère est un copolymère de polyfluorure de vinylidène et d'hexafluoropropylène (PVDF/HFP) fourni par la société SOLVAY sous la référence SOLEF® 21216/1001 à 15% en masse d'électrode.

L'agent plastifiant est du carbonate de propylène (PC) à 55% en masse de mélange.

Les charges actives sont constituées d'un charbon actif naturel activé physiquement, présentant une surface spécifique comprise entre 1400 m$^2$/g et 1600 m$^2$/g et plus dense que celui utilisé dans les exemples qui précèdent.

Le collecteur est une feuille d'aluminium traitée d'épaisseur 30 $\mu$m.

On obtient un film d'électrode contenant 85% en poids de charges et qui possède les caractéristiques suivantes :

- une capacité massique de 41.5 F/g,
- une résistance série de 8.6 Ohm.cm$^2$,
- une densité de 0.70,
- une porosité de 66%,
- une perméabilité au gaz de 1.1 mDarcy,
- une surface BET de 969 m$^2$/g,
- une conductivité électrique dans le sens de l'épaisseur de 0.8 S/cm.

EXEMPLE 6

On forme un film de complexe collecteur-électrode, dont l'électrode est obtenue en mélangeant un polymère, un agent plastifiant et une charge active. Le mélange se présente sous forme de gel et est extrudé par une extrudeuse bivis à travers une filière jonc de diamètre 4mm. L'extrudât ainsi formé est déposé sur le collecteur par laminage. Le complexe collecteur-pâte est séché pour former le complexe collecteur-électrode.

Le liant polymère est un copolymère de polyfluorure de vinylidène et d'hexafluoropropylène (PVDF/HFP) fourni par la société SOLVAY sous la référence SOLEF® 21216/1001 à 10% en masse d'électrode.

L'agent plastifiant est de la $\gamma$-Butyrolactone à 61% en masse de mélange.

Les charges actives sont constituées d'un charbon actif naturel activé physiquement, présentant une surface spécifique comprise entre 1800 m$^2$/g et 2000 m$^2$/g.

Le collecteur est une feuille d'aluminium traitée d'épaisseur 30 $\mu$m.

On obtient un film d'électrode contenant 90% en poids de charges et qui possède les caractéristiques suivantes :

- une capacité massique de 50.1 F/g,
- une résistance série de 6.7 Ohm.cm$^2$,
- une densité de 0.53,
- une porosité de 75%.

EXEMPLE 7

On forme un film de complexe collecteur-électrode, dont l'électrode est obtenue en mélangeant un polymère, un agent plastifiant et une charge active. Le mélange se présente sous forme de gel et est extrudé par une extrudeuse bivis à travers une filière jonc de diamètre 4mm. L'extrudât ainsi formé est déposé sur le collecteur par laminage. Le complexe collecteur-pâte est séché pour former le complexe collecteur-électrode.

Le liant polymère est un copolymère de polyfluorure de vinylidène et d'hexafluoropropylène (PVDF/HFP) fourni par la société SOLVAY sous la référence SOLEF® 21216/1001 à 10% en masse d'électrode.

L'agent plastifiant est du carbonate de propylène (PC) à 67% en masse de mélange.

Les charges actives sont constituées d'un charbon actif naturel activé physiquement, présentant une surface spécifique comprise entre 1800 m$^2$/g et 2000 m$^2$/g .

20% en masse d'un additif conducteur est avantageusement ajouté à la formulation.

Le collecteur est une feuille d'aluminium etchée d'épaisseur 20 $\mu$m.

On obtient un film d'électrode contenant 90% en poids de charges et qui possède les caractéristiques suivantes :

- une capacité massique de 40.3 F/g
- une résistance série de 5.8 Ohm.cm$^2$
- une densité de 0.67
- une porosité de 67%
- une surface BET de 985 m$^2$/g

La spectrométrie dynamique à l'état fondu nous permet de mesurer les modules d'élasticité de la pâte d'électrode à une température donnée et de caractériser le gel. La pâte d'électrode issue du mélange décrit ci-dessus a été mise sous forme de disque de diamètre 25mm et d'épaisseur 650 $\mu$m.

Cette caractérisation rhéologique a été réalisée avec un rhéomètre à contrainte contrôlée, l'AR2000 de TA Instruments, en géométrie plan-plan. Le diamètre des plateaux est 25mm. Toutes les mesures ont été effectuées dans le domaine linéaire. La contrainte appliquée est de 200 Pa. La déformation induite à l'échantillon est comprise entre 0,01 et 100 Hz.

Les températures d'analyse sont des valeurs typiques de température d'extrusion.

Les résultats ainsi obtenus sont représentés sur la Figure 16. Ils nous permettent de conclure que le module élastique est compris entre $10^4$ et $10^8$Pa.

Le tableau 4 indique la quantité d'agent plastifiant nécessaire pour former les électrodes dont le taux de charges est de 80% en masse en fonction de la surface spécifique BET des charges actives.

TABLEAU 1

| Polymère | Fournisseur | Grade | Plastifiant | % plastifiant | capacité massique | résistance série | densité | Porosité |
|---|---|---|---|---|---|---|---|---|
|  |  |  |  |  | F/g | ohm.cm$^2$ | g/cm$^3$ | % |
| PVDF | Solvay | 6010 | PC | 55 | 36.6 | 7.2 | 0.60 | 70 |
|  | Solvay | 6020 | PC | 60 | 31.6 | 7.1 | 0.60 | 70 |
|  |  |  | EC/PC | 60 | 35.2 | 5.3 | 0.53 | 74 |
|  |  |  | GBT | 57 | 34.1 | 6.4 | 0.62 | 69 |
|  | Atofina | 721 | PC | 60 | 36.6 | 6.3 | 0.57 | 72 |
|  | Atofina | 761 | PC | 60 | 34.4 | 6.4 | 0.57 | 72 |
|  | Atofina | 500 | PC | 56 | 35.8 | 7.9 | 0.63 | 69 |
|  | Atofina | ADX121 | PC | 56 | 36.7 | 6.5 | 0.61 | 70 |
|  | Kureha | W9100 | PC | 59 | 36.8 | 5.8 | 0.56 | 71 |
| PVDF/HFP | Solvay | 21510 | PC | 55 | 34.1 | 8.1 | 0.60 | 70 |
|  | Solvay | 21216 | PC | 54 | 35.7 | 8.1 | 0.63 | 69 |
|  |  |  | EC/PC | 60 | 38.5 | 6.5 | 0.57 | 72 |
|  |  |  | GBT | 58 | 36.6 | 6.9 | 0.51 | 75 |
|  | Atofina | 2501 | PC | 55 | 35.2 | 8.6 | 0.61 | 70 |
|  | Atofina | 2821 | PC | 56 | 37.1 | 8 | 0.60 | 70 |
|  | Kureha | KF#2300 | PC | 60 | 37.7 | 7.1 | 0.60 | 70 |
| SBM | Atofina | AFX342 | GBT | 56 | 37.3 | 8.8 | 0.55 | 73 |

TABLEAU 2

| Taux charges % | Taux liant % | Taux de plastifiant % | Capacité F/g | Résistance Série ohm.cm$^2$ | S BET (cm$^2$/g) | Perméabilité (mDarcy) | Densité (g/cm3) | Porosité % |
|---|---|---|---|---|---|---|---|---|
| 80 | 20 | 56 | 36.0 | 6.8 | x | x | 0.66 | 67 |
| 85 | 15 | 66 | 37.3 | 5.4 | 743 | 2.4 | 0.51 | 75 |
| 90 | 10 | 67 | 38.7 | 4.6 | x | x | 0.52 | 75 |

TABLEAU 3

| Exemple | Technologie | Taux charges % | Capacité F/g | Résistance Série ohm.cm² | S BET (cm²/g) | Perméabilité (mDarcy) | Densité (g/cm3) | Poros é % |
|---|---|---|---|---|---|---|---|---|
| 3a | Extrusion-gel | 85 | 36.2 | 5.0 | 743 | 2.4 | 0.52 | 75 |
| 3b | Extrusion sèche | 49 | 20.0 | 12.0 | 62 | 0.2 | 1.02 | 42 |
| 3c | PTFE | 98 | 43.9 | 5.1 | 1066 | 0.9 | 0.49 | 77 |

TABLEAU 4

| Surface spécifique BET des charges actives (m²/g) | Fournisseur | Densité des charges actives (g/cm3) | Taux d'agent plastifiant dans le mélange (% massique) |
|---|---|---|---|
| 3000 | Osaka | 0,36 | 72 |
| 1000 - 1200 | Ceca | 0,48 | 66 |
| 2000 | Osaka | 0,49 | 63 |
| 1500 | Kuraray | 0,58 | 59 |
| 1700 | Kuraray | 0,58 | 56 |
| 1700 | Kuraray | 0,62 | 55 |
| 1500 | Osaka | 0,64 | 54 |
| 1450 | Ceca | 0,67 | 55 |

## Revendications

1. Procédé de fabrication d'un complexe substrat - électrode poreuse (6) à taux de charge supérieur ou égal à 80% pour supercondensateur comprenant au moins les étapes consistant à :

   - préparer un mélange contenant au moins un polymère (1), au moins un agent plastifiant porogène liquide (3), et au moins une charge active (2),
   - extruder le mélange sous forme de pâte, la pâte étant sous forme de gel possédant un module d'élasticité compris entre $10^4$ et $10^8$ Pascal aux températures d'extrusion, dans une gamme de fréquences comprises entre 0,01 et 100 Hz,
   - déposer la pâte sur le substrat et la laminer,
   - traiter le complexe ainsi formé pour éliminer tout ou partie de l'agent plastifiant (3) et créer de la porosité dans l'électrode.

2. Procédé selon la revendication 1, **caractérisé en ce que** dans le mélange, l'agent plastifiant liquide (3) est insuffisant pour solubiliser complètement le polymère de sorte que le mélange forme un gel au cours du procédé d'extrusion.

3. Procédé selon l'une des revendications 1 ou 2, **caractérisé en ce que** l'on dépose le mélange d'électrode de part et d'autre d'un substrat.

4. Procédé selon l'une des revendications précédentes, **caractérisé en ce que** le substrat est un collecteur de courant constitué d'un film métallique.

5. Procédé selon l'une des revendications précédentes, **caractérisé en ce que** le substrat est un film d'aluminium collecteur de courant.

6. Procédé selon l'une des revendications précédentes, **caractérisé en ce que** le substrat est un film d'aluminium gravé en surface du collecteur de courant.

7. Procédé selon l'une des revendications précédentes prise en combinaison avec la revendication 4, **caractérisé en ce que** le collecteur a une épaisseur comprise entre 15 et 50 μm.

8. Procédé selon l'une des revendications précédentes prise en combinaison avec la revendication 4, **caractérisé en ce qu'**une sous-couche conductrice est présente entre le collecteur et l'électrode.

9. Procédé selon la revendication 8, **caractérisé en ce que** la sous-couche conductrice est formée par dépôt sur le film métallique.

10. Procédé selon l'une des revendications 8 ou 9, **caractérisé en ce que** la sous-couche conductrice est métallique.

**11.** Procédé selon l'une des revendications 8 à 10, **caractérisé en ce que** la sous-couche est constituée d'un nitrure ou d'un carbure métallique.

**12.** Procédé selon l'une des revendications 8 à 11, **caractérisé en ce que** la sous-couche est carbonée.

**13.** Procédé selon la revendication 12, caractérisé en en ce que la sous-couche carbonée contient plus de 50% en masse d'un matériau carboné conducteur.

**14.** Procédé selon l'une des revendications 8 à 13, **caractérisé en ce que** la sous-couche a une épaisseur comprise entre 0,1 et 25 μm.

**15.** Procédé selon l'une des revendications 8 à 14, **caractérisé en ce que** la sous-couche est obtenue par extrusion-gel.

**16.** Procédé selon l'une des revendications 8 à 14, **caractérisé en ce que** la sous-couche est déposée par enduction, par pulvérisation ou par évaporation sur le collecteur.

**17.** Procédé selon la revendication 1 à 3, **caractérisé en ce que** le substrat sur lequel le film d'électrode est déposé est un séparateur.

**18.** Procédé selon l'une des revendications qui précèdent, dans lequel la pâte se présente sous la forme d'un gel.

**19.** Procédé selon l'une des revendications qui précèdent, dans lequel l'agent plastifiant liquide (3) est éliminé en tout ou partie par évaporation.

**20.** Procédé selon l'une des revendications qui précèdent, dans lequel l'agent plastifiant liquide (3) est éliminé en tout ou partie par voie solvant.

**21.** Procédé selon l'une des revendications qui précèdent, dans lequel les charges actives (2) comprennent du charbon actif.

**22.** Procédé selon la revendication 21, dans lequel le charbon actif se présente sous forme de poudres ou de fibres.

**23.** Procédé selon l'une des revendications 21 ou 22, dans lequel le charbon actif possède une surface spécifique comprise entre 1000 et 2500 $m^2$/g.

**24.** Procédé selon l'une des revendications qui précèdent, dans lequel les charges actives (2) comprennent des oxydes de métaux de transition.

**25.** Procédé selon l'une des revendications qui précèdent, dans lequel les charges actives (2) comprennent des nanotubes de carbone.

**26.** Procédé selon l'une des revendications qui précèdent, dans lequel on ajoute au mélange au moins un additif conducteur.

**27.** Procédé selon la revendication 26, dans lequel l'additif conducteur est choisi parmi le noir d'acétylène, le noir de carbone ou le graphite ou un mélange de ces composés.

**28.** Procédé selon l'une des revendications qui précèdent, **caractérisé en ce qu'**on incorpore au moins 1,5 % en masse d'additif conducteur dans le mélange.

**29.** Procédé selon l'une des revendications qui précèdent, dans lequel le mélange contient un polymère (1) choisi dans la famille des fluoropolymères.

**30.** Procédé selon la revendication 29, dans lequel le mélange contient du polyfluorure de vinylidène (PVDF), sous forme d'homopolymère ou de copolymère seul ou en mélange.

**31.** Procédé selon la revendication 30, **caractérisé en ce que** le copolymère de PVDF est à base d'hexafluoropropylène (HFP) ou de trifluorochloroéthylène (CTFE).

**32.** Procédé selon la revendication 31, **caractérisé en ce qu'**il comprend au plus 50% de monomère d'hexafluoropropylène (HFP) ou de trifluorochloroéthylène (CTFE) copolymérisé avec le fluorure de vinylidène.

**33.** Procédé selon l'une des revendications qui précèdent, dans lequel le mélange contient un polymère (1) choisi dans la famille des polyéthers.

**34.** Procédé selon la revendication 33, dans lequel le mélange contient du polyoxyéthylène (POE).

**35.** Procédé selon l'une des revendications qui précèdent, dans lequel le mélange contient un polymère (1) choisi dans la famille des polyacryliques.

**36.** Procédé selon la revendication 35, dans lequel le mélange contient du polyméthacrylate de méthyle (PMMA) ou du polyacrylonitrile (PAN).

**37.** Procédé selon l'une des revendications qui précèdent, dans lequel le mélange contient un polymère (1) choisi dans la famille des élastomères.

**38.** Procédé selon l'une des revendications qui précèdent, dans lequel le mélange contient du copolymère de polyvinyliques, tels que du copolymère de butadiène, d'isopropène ou de styrène, et d'acryliques.

**39.** Procédé selon la revendication 38, **caractérisé en ce que** les copolymères de polyvinyliques comprennent des élastomères ter-polymères styrène-butadiène-PMMA (SBM) ou les élastomères copolymères styrène-acrylonitrile (SAN).

**40.** Procédé selon l'une des revendications qui précèdent, dans lequel le mélange contient un agent plastifiant liquide (3) choisi dans la famille des carbonates.

**41.** Procédé selon la revendication 40, dans lequel l'agent plastifiant liquide (3) est choisi parmi le carbonate d'éthylène ou le carbonate de propylène, seul ou en mélanges.

**42.** Procédé selon l'une des revendications qui précèdent, dans lequel l'agent plastifiant liquide (3) est choisi parmi les lactones, tels que la $\gamma$-butyrolactone (GBT), la N-méthylpyrrolidone (NMP), le tétrahydrofurane (THF), l'acétone, le cyclohexane, le diméthylformamide (DMF), l'acrylonitrile, le diméthylsulfoxide (DMSO), ou le méthyléthylkétone (MEK) seul ou en mélanges.

**43.** Procédé selon l'une des revendications précédentes, **caractérisé en ce que** l'extrusion du mélange est effectuée au moyen d'une extrudeuse bivis.

**44.** Procédé selon l'une des revendications précédentes, **caractérisé en ce que** l'extrusion du mélange est effectuée au moyen d'un malaxeur continu.

**45.** Procédé selon l'une des revendications qui précèdent dans lequel on ajoute après le laminage du complexe une étape de calandrage.

**46.** Procédé selon l'une des revendications qui précèdent **caractérisé en ce que** le film d'électrode obtenu a une épaisseur comprise entre 80 et 200 $\mu$m.

**47.** Pâte d'électrode (6), pour supercondensateur, à taux de charge compris entre 25% et 45 %, comprenant un mélange contenant au moins un polymère (1), au moins un agent plastifiant liquide (3), et au moins une charge active (2), **caractérisée en ce que** le taux de plastifiant en masse est compris entre 50 et 70% et **en ce que** la pâte est sous forme de gel possédant un module d'élasticité compris entre $10^4$ et $10^8$ Pascal, aux températures d'extrusion, dans une gamme de fréquences comprises entre 0,01 et 100 Hz.

**48.** Pâte d'électrode selon la revendication 47 **caractérisée en ce que** les charges actives (2) comprennent du charbon actif.

**49.** Pâte d'électrode selon la revendication 48, dans laquelle le charbon actif se présente sous forme de poudres ou de fibres.

**50.** Pâte d'électrode selon l'une des revendications 48 ou 49, dans laquelle le charbon actif a une surface spécifique comprise entre 1000 et 2500 $m^2$/g.

**51.** Pâte d'électrode selon l'une des revendications 47 à 50, **caractérisée en ce que** les charges actives (2) comprennent des oxydes de métaux de transition.

**52.** Pâte d'électrode selon l'une des revendications 47 à 51, **caractérisée en ce que** les charges actives (2) comprennent des nanotubes de carbone.

**53.** Pâte d'électrode selon l'une des revendications 47 à 52, **caractérisée en ce qu'**elle contient au moins un additif conducteur.

**54.** Pâte d'électrode selon la revendication 53, **caractérisée en ce que** l'additif conducteur est choisi parmi le noir d'acétylène, le noir de carbone ou le graphite ou un mélange de ces composés.

**55.** Pâte d'électrode selon l'une des revendications 53 et 54, **caractérisée en ce qu'**elle comporte au moins 1,5 % en masse d'additif conducteur.

**56.** Pâte d'électrode selon l'une des revendications 47 à 55, **caractérisée en ce que** le mélange contient un polymère (1) choisi dans la famille des fluoropolymères.

**57.** Pâte d'électrode selon la revendication 56, **caractérisée en ce que** le mélange contient du polyfluorure de vinylidène (PVDF), sous forme d'homopolymère ou de copolymère, seul ou en mélanges.

**58.** Pâte d'électrode selon la revendication 57, **caractérisée en ce que** le copolymère de PVDF est à base d'hexafluoropropylène (HFP) ou de trifluorochloroéthylène (CTFE).

**59.** Pâte selon la revendication 58, **caractérisé en ce qu'**il comprend au plus 50% de monomère d'hexafluoropropylène (HFP) ou de trifluorochloroéthylène (CTFE) copolymérisé avec le fluorure de vinylidène.

**60.** Pâte d'électrode selon l'une des revendications 47 à 59, **caractérisée en ce que** le mélange contient un polymère (1) choisi dans la famille des polyéthers.

**61.** Pâte d'électrode selon la revendication 60, **caractérisée en ce que** le mélange contient du polyoxyéthylène (POE).

**62.** Pâte d'électrode selon l'une des revendications 47 à 61, **caractérisée en ce que** le mélange contient un polymère (1) choisi dans la famille des polyacryliques.

**63.** Pâte d'électrode selon la revendication 62, **caractérisée en ce que** le mélange contient du polyméthacrylate de méthyle (PMMA) ou du polyacrylonitrile (PAN).

**64.** Pâte d'électrode selon l'une des revendications 47 à 63, **caractérisée en ce que** le mélange contient un polymère (1) choisi dans la famille des élastomères.

**65.** Pâte d'électrode selon l'une des revendications 47 à 64, **caractérisée en ce que** le mélange contient du copolymère de polyvinyliques, tels que du copolymère de butadiène, d'isopropène ou de styrène, et d'acryliques.

**66.** Pâte d'électrode selon l'une des revendications 47 à 65, **caractérisée en ce que** le mélange contient un agent plastifiant liquide (3) choisi dans la famille des carbonates.

**67.** Pâte d'électrode selon la revendication 66, **caractérisée en ce que** l'agent plastifiant liquide (3) est choisi parmi le carbonate d'éthylène ou le carbonate de propylène, seul ou en mélanges.

**68.** Pâte d'électrode selon l'une des revendications 47 à 67, **caractérisée en ce que** l'agent plastifiant liquide (3) est choisi parmi la $\gamma$-butyrolactone (GBT), la N-méthylpyrrolidone (NMP), le tétrahydrofurane (THF), l'acétone, le cyclohexane, le diméthylformamide (DMF), l'acrylonitrile, le diméthylsulfoxide (DMSO), ou le méthyléthylkétone (MEK) seul ou en mélanges.

**69.** Complexe collecteur-pâte d'électrode pour supercondensateur, **caractérisé par** une pâte d'électrode selon l'une quelconque des revendications 47 à 68.

**70.** Complexe collecteur-pâte d'électrode pour supercondensateur, selon la revendication 69, **caractérisé en ce que** l'agent plastifiant de la pâte d'électrode est conservé dans la pâte pour jouer le rôle de solvant de l'électrolyte du supercondensateur.

**71.** Complexe collecteur - électrode pour supercondensateur dont le collecteur est une feuille métallique, **caractérisé en ce que**:

- l'électrode (6) comprend un mélange qui contient au moins un liant polymère à base de polyfluorure de vinylidène (PVDF), sous forme d'homopolymère ou de copolymère seul ou en mélanges, et au moins une charge active (2), à taux de charge supérieur ou égal à 80%,
- l'électrode est obtenue à partir d'une pâte sous forme de gel possédant un module d'élasticité compris entre $10^4$ et $10^8$ Pascal, aux températures d'extrusion, dans une gamme de fréquences comprises entre 0,01 et 100 Hz.
- l'électrode présente une porosité alvéolaire ayant une surface spécifique supérieure à 400 m$^2$/g et un taux de porosité supérieur à 60% en volume,
- dont le liant polymère de l'électrode est sous forme d'une phase dispersée de morphologie particulaire ou granulaire formant une matrice discontinue.

**72.** Complexe collecteur - électrode pour supercondensateur selon la revendication 71, **caractérisé en ce que** les charges actives (2) comprennent du charbon actif.

**73.** Complexe collecteur - électrode pour supercondensateur selon la revendication 72, **caractérisé en ce que** le charbon actif se présente sous forme de poudres ou de fibres.

**74.** Complexe collecteur - électrode pour supercondensateur selon l'une des revendications 72 ou 73, **caractérisé en ce que** le charbon actif a une surface spécifique comprise entre 1000 et 2500 m$^2$/g.

**75.** Complexe collecteur - électrode pour supercondensateur selon l'une des revendications 71 à 74, **caractérisé en ce que** les charges actives (2) comprennent des oxydes de métaux de transition.

**76.** Complexe collecteur - électrode pour supercondensateur selon l'une des revendications 71 à 75, **caractérisé en ce que** les charges actives (2) comprennent des nanotubes de carbone.

**77.** Complexe collecteur - électrode pour supercondensateur selon l'une des revendications 71 à 76, **caractérisé en ce que** l'électrode a une épaisseur comprise entre 80 et 200 $\mu$m.

**78.** Complexe collecteur - électrode pour supercondensateur selon l'une des revendications 71 à 77, **caractérisé en ce que** l'électrode a une densité massique comprise entre 0,5 et 0,9.

**79.** Complexe collecteur - électrode pour supercondensateur selon l'une des revendications 71 à 78, **caractérisée en ce que** l'électrode a une capacité massique supérieure à 30 F/g.

**80.** Complexe collecteur - électrode pour supercondensateur selon l'une des revendications 71 à 79, **caractérisée en ce que** l'électrode a une perméabilité au gaz supérieure à 0,6 mDarcy.

**81.** Complexe collecteur - électrode pour supercondensateur selon l'une des revendications 71 à 80, **caractérisée en ce que** l'électrode a une conductivité électrique dans le sens de l'épaisseur supérieure à 0,5 Siemens/cm.

**82.** Complexe collecteur - électrode pour supercondensateur selon l'une des revendications 71 à 81, **caractérisé en ce que** l'électrode comporte au moins un additif conducteur.

**83.** Complexe collecteur - électrode pour supercondensateur selon la revendication 82, **caractérisé en ce que** l'additif conducteur est choisi parmi le noir d'acétylène, le noir de carbone ou le graphite ou un mélange de ces composés.

**84.** Complexe collecteur - électrode pour supercondensateur selon l'une des revendications 82 ou 83, **caractérisé en ce que** l'électrode comporte au moins 5% en masse d'additif conducteur.

**85.** Complexe collecteur - électrode pour supercondensateur selon l'une des revendications 71 à 84, **caractérisé en ce que** le collecteur est une feuille d'aluminium.

**86.** Complexe collecteur - électrode pour supercondensateur selon l'une des revendications 71 à 85, **caractérisé en ce que** le collecteur est une feuille d'aluminium etché.

**87.** Complexe collecteur - électrode pour supercondensateur selon l'une des revendications 71 à 86, **caractérisé en ce que** le collecteur a une épaisseur comprise entre 15 et 50 $\mu$m.

**88.** Complexe collecteur - électrode pour supercondensateur selon l'une des revendications 71 à 87, **caractérisé en ce qu'**il comporte une sous-couche conductrice entre le collecteur et le matériau d'électrode.

**89.** Complexe collecteur - électrode pour supercondensateur selon la revendication 88, **caractérisé en ce que** la sous-couche est métallique.

**90.** Complexe collecteur - électrode pour supercondensateur selon la revendication 89, **caractérisé en ce que** la sous-couche est constituée d'un nitrure ou d'un carbure métallique.

**91.** Complexe collecteur - électrode pour supercondensateur selon la revendication 88, **caractérisé en ce que** la sous-couche est carbonée.

**92.** Complexe collecteur - électrode pour supercondensateur selon la revendication 91, **caractérisé en ce que** la sous-couche carbonée contient plus de 50% en masse d'un matériau carboné conducteur.

**93.** Complexe collecteur - électrode pour supercondensateur selon l'une quelconque des revendications 88 à 92, **caractérisé en ce que** la sous-couche a une épaisseur comprise entre 0,1 et 25 $\mu$m.

**94.** Complexe collecteur - électrode pour supercondensateur selon l'une des revendications 88 à 93, **caractérisé en ce que** la sous-couche est obtenue par extrusion-gel.

**95.** Complexe collecteur - électrode pour supercondensateur selon l'une des revendications 88 à 93, **caractérisé en ce que** la sous-couche est déposée par enduction, par pulvérisation ou par évaporation sur le collecteur.

**96.** Complexe collecteur - électrode pour supercondensateur, dont le collecteur est un film d'aluminium pur, dont l'électrode contient au moins 70% de charbon actif, et au moins un liant à base de fluoropolymère, **caractérisé en ce que** l'électrode comporte au moins 5% en masse d'additif conducteur.

**97.** Complexe électrode - collecteur - électrode pour supercondensateur, **caractérisé en ce qu'**il comprend un complexe collecteur - électrode selon les revendications 71 à 96, la seconde face du collecteur étant recouverte d'une seconde couche d'électrode de caractéristiques identiques à la couche d'électrode dudit complexe collecteur - électrode.

**98.** Supercondensateur **caractérisé en ce qu'**il comporte au moins un complexe calandré électrode - collecteur - électrode dont chaque électrode est déposée puis laminée sur un film collecteur métallique, et dont:

> - chaque électrode (6), comprend un mélange qui contient au moins un liant polymère à base de polyfluorure de vinylidène (PVDF), sous forme d'homopolymère ou de copolymère seul ou en mélange, et au moins une charge active (2), à taux de charge supérieur ou égal à 80%,
> - l'électrode est obtenue à partir d'une pâte sous forme de gel possédant un module d'élasticité compris entre $10^4$ et $10^8$ Pascal, aux températures d'extrusion, dans une gamme de fréquences comprises entre 0,01 et 100 Hz.
> - l'électrode présente une porosité alvéolaire ayant une surface spécifique supérieure à 400 m$^2$/g et un taux de porosité supérieur à 60% en volume,
> - le liant polymère des électrodes est sous forme d'une phase dispersée de morphologie particulaire ou granulaire formant une matrice discontinue,
> - le collecteur est un film métallique d'épaisseur comprise entre 15 et 50 $\mu$m.

**Patentansprüche**

1. Verfahren für die Herstellung eines Komplexes Substrat - poröse Elektrode (6) mit Ladungsdichte von über oder gleich 80 % für Superkondensator, umfassend mindestens die folgenden Schritte:

   - Herstellen eines Gemischs, das mindestens ein Polymer (1), mindestens einen flüssigen porenbildenden Weichmacher (3) und mindestens eine aktive Ladung (2) enthält,
   - Strangpressen des Gemischs in Form von Brei, wobei der Brei in Gelform ist mit einem Elastizitätsmodul zwischen $10^4$ und $10^8$ Pascal inklusive, bei Strangpresstemperaturen, in einem Frequenzbereich zwischen 0,01 und 100 Hz inklusive,
   - Aufbringen des Breis auf das Substrat und Walzen desselben,
   - Bearbeiten des derart gebildeten Komplexes, um den Weichmacher (3) ganz oder teilweise zu entfernen und um Porosität in der Elektrode zu bilden.

2. Verfahren nach Anspruch 1, **dadurch gekennzeichnet, dass** der flüssige Weichmacher (3) in dem Gemisch nicht ausreichend ist, um das Polymer vollständig zu verflüssigen, so dass das Gemisch während des Strangpressverfahrens ein Gel bildet.

3. Verfahren nach einem der Ansprüche 1 oder 2, **dadurch gekennzeichnet, dass** das Elektrodengemisch beiderseits eines Substrats aufgebracht wird.

4. Verfahren nach einem der vorangehenden Ansprüche, **dadurch gekennzeichnet, dass** das Substrat ein Stromsammler ist, gebildet von einer Metallfolie.

5. Verfahren nach einem der vorangehenden Ansprüche, **dadurch gekennzeichnet, dass** das Substrat eine Stromsammler-Aluminiumfolie ist.

6. Verfahren nach einem der vorangehenden Ansprüche, **dadurch gekennzeichnet, dass** das Substrat eine auf der Stromsammleroberfläche gravierte Aluminiumfolie ist.

7. Verfahren nach einem der vorangehenden Ansprüche, herangezogen in Kombination mit Anspruch 4, **dadurch gekennzeichnet, dass** der Sammler eine Dicke zwischen 15 und 50 $\mu$m inklusive hat.

8. Verfahren nach einem der vorangehenden Ansprüche herangezogen in Kombination mit Anspruch 4, **dadurch gekennzeichnet, dass** zwischen dem Sammler und der Elektrode eine leitende Unterschicht vorhanden ist.

9. Verfahren nach Anspruch 8, **dadurch gekennzeichnet, dass** die leitende Unterschicht durch Depot auf die Metallfolie gebildet ist.

10. Verfahren nach einem der Ansprüche 8 oder 9, **dadurch gekennzeichnet, dass** die leitende Unterschicht metallisch ist.

11. Verfahren nach einem der Ansprüche 8 bis 10, **dadurch gekennzeichnet, dass** die Unterschicht von einem Nitrid oder von einer Metallkohlenstoffverbindung gebildet ist.

12. Verfahren nach einem der Ansprüche 8 bis 11, **dadurch gekennzeichnet, dass** die Unterschicht kohlenstoffhaltig ist.

13. Verfahren nach Anspruch 12, **dadurch gekennzeichnet, dass** die kohlenstoffhaltige Unterschicht über 50 Ma% eines kohlenstoffhaltigen leitenden Materials enthält.

14. Verfahren nach einem der Ansprüche 8 bis 13, **dadurch gekennzeichnet, dass** die Unterschicht eine Dicke zwischen 0,1 und 25 $\mu$m inklusive hat.

15. Verfahren nach einem der Ansprüche 8 bis 14, **dadurch gekennzeichnet, dass** die Unterschicht durch Gelstrangpressen hergestellt wird.

16. Verfahren nach einem der Ansprüche 8 bis 14, **dadurch gekennzeichnet, dass** die Unterschicht durch Beschichten, durch Sprühen oder durch Verdampfen auf den Sammler aufgebracht wird.

**17.** Verfahren nach Anspruch 1 bis 3, **dadurch gekennzeichnet, dass** das Substrat, auf welches die Elektrodenfolie aufgebracht wird, ein Separator ist.

**18.** Verfahren nach einem der Ansprüche, die vorangehen, wobei der Brei in Form eines Gels vorliegt.

**19.** Verfahren nach einem der Ansprüche, die vorangehen, wobei der flüssige Weichmacher (3) ganz oder teilweise durch Verdampfen entfernt wird.

**20.** Verfahren nach einem der Ansprüche, die vorangehen, wobei der flüssige Weichmacher (3) ganz oder teilweise auf dem Lösungsmittelweg entfernt wird.

**21.** Verfahren nach einem der Ansprüche, die vorangehen, wobei die aktiven Ladungen (2) Aktivkohle umfassen.

**22.** Verfahren nach Anspruch 21, wobei die Aktivkohle in Form von Pulvern oder von Fasern vorliegt.

**23.** Verfahren nach einem der Ansprüche 21 oder 22, wobei die Aktivkohle eine spezifische Fläche zwischen 1000 und 2500 $m^2$/g inklusive besitzt.

**24.** Verfahren nach einem der Ansprüche, die vorangehen, wobei die aktiven Ladungen (2) Übergangsmetalloxide umfassen.

**25.** Verfahren nach einem der Ansprüche, die vorangehen, wobei die aktiven Ladungen (2) Kohlenstoff-Nanoröhrchen umfassen.

**26.** Verfahren nach einem der Ansprüche, die vorangehen, wobei dem Gemisch mindestens ein leitender Zusatzstoff hinzugefügt wird.

**27.** Verfahren nach Anspruch 26, wobei der leitende Zusatzstoff aus dem Acetylenschwarz, dem Carbonschwarz oder dem Graphit oder einem Gemisch dieser Verbindungen ausgewählt ist.

**28.** Verfahren nach einem der Ansprüche, die vorangehen, **dadurch gekennzeichnet, dass** mindestens 1,5 Ma% leitender Zusatzstoff in das Gemisch inkorporiert wird.

**29.** Verfahren nach einem der Ansprüche, die vorangehen, wobei das Gemisch ein Polymer (1) enthält, das auch der Familie der Fluopolymere ausgewählt ist.

**30.** Verfahren nach Anspruch 29, wobei das Gemisch Polyvinylidenfluorid (PVDF) in Form von Homopolymer oder Copolymer allein oder im Gemisch enthält.

**31.** Verfahren nach Anspruch 30, **dadurch gekennzeichnet, dass** das PVDF-Copolymer auf der Basis von Hexafluorpropylen (HFP) oder von Trifluorchlorethylen (CTFE) ist.

**32.** Verfahren nach Anspruch 31, **dadurch gekennzeichnet, dass** es höchstens 50 % Hexafluorpropylen-Monomer (HFP) oder Trifluorchlorethylen (CTFE), copolymerisiert mit Vinylidenfluorid, umfasst.

**33.** Verfahren nach einem der Ansprüche, die vorangehen, wobei das Gemisch ein Polymer (1) enthält, ausgewählt aus der Familie der Polyether.

**34.** Verfahren nach Anspruch 33, wobei das Gemisch Polyoxyethylen (POE) enthält.

**35.** Verfahren nach einem der Ansprüche, die vorangehen, wobei das Gemisch ein Polymer (1) enthält, ausgewählt aus der Familie der Polyacryle.

**36.** Verfahren nach Anspruch 35, wobei das Gemisch Polymethylmethacrylat (PMMA) oder Polyacrylnitril (PAN) enthält.

**37.** Verfahren nach einem der Ansprüche, die vorangehen, wobei das Gemisch ein Polymer (1) enthält, ausgewählt aus der Familie der Elastomere.

**38.** Verfahren nach einem der Ansprüche, die vorangehen, wobei das Gemisch Polyvinylcopolymer wie Butadien-, Isopropen- oder Styrol- und Acrylcopolymer enthält.

**39.** Verfahren nach Anspruch 38, **dadurch gekennzeichnet, dass** die Polyvinylcopolymere ter-Polymerelastomere Styrol-Butadien-PMMA (SBM) oder die Copolymerelastomere Styrol-Acrylnitril (SAN) umfassen.

**40.** Verfahren nach einem der Ansprüche, die vorangehen, wobei das Gemisch einen flüssigen Weichmacher (3) enthält, der aus der Familie der Carbonate ausgewählt ist.

**41.** Verfahren nach Anspruch 40, wobei der flüssige Weichmacher (3) aus dem Ethylencarbonat oder dem Propylencarbonat, allein oder in Gemischen, ausgewählt ist.

**42.** Verfahren nach einem der Ansprüche, die vorangehen, wobei der flüssige Weichmacher (3) aus den Lactonen wie dem γ-Butyrolacton (GBT), dem N-methylpyrrolidon (NMP), dem Tetrahydrofuran (THF), dem Aceton, dem Cyclohexan, dem Dimethylformamid (DMF), dem Acrylnitril, dem Dimethylsulfoxid (DMSO) oder dem Methylethylketon (MEK) allein oder in Gemischen ausgewählt ist.

**43.** Verfahren nach einem der vorangehenden Ansprüche, **dadurch gekennzeichnet, dass** das Strangpressen des Gemischs mit einer Strangpresse mit zwei Schrauben durchgeführt wird.

**44.** Verfahren nach einem der vorangehenden Ansprüche, **dadurch gekennzeichnet, dass** das Strangpressen des Gemischs mit einem kontinuierlichen Mischer durchgeführt wird.

**45.** Verfahren nach einem der Ansprüche, die vorangehen, wobei nach dem Walzen des Komplexes ein Kalanderschritt hinzugefügt wird.

**46.** Verfahren nach einem der Ansprüche, die vorangehen, **dadurch gekennzeichnet, dass** die erhaltene Elektrodenfolie eine Dicke zwischen 80 und 200 μm inklusive hat.

**47.** Elektrodenbrei (6) für Superkondensator mit Ladefaktor zwischen 25 % und 45 % inklusive, umfassend ein Gemisch, enthaltend mindestens ein Polymer (1), mindestens einen flüssigen Weichmacher (3) und mindestens eine aktive Ladung (2), **dadurch gekennzeichnet, dass** der Weichmachergehalt zwischen 50 und 70 Ma% inklusive beträgt und dass der Brei in Gelform ist mit einem Elastizitätsmodul zwischen $10^4$ und $10^8$ Pascal inklusive, bei Strangpresstemperaturen, in einem Frequenzbereich zwischen 0,01 und 100 Hz inklusive.

**48.** Elektrodenbrei nach Anspruch 47, **dadurch gekennzeichnet, dass** die aktiven Ladungen (2) Aktivkohle umfassen.

**49.** Elektrodenbrei nach Anspruch 48, wobei die Aktivkohle in Form von Pulvern oder von Fasern vorliegt.

**50.** Elektrodenbrei nach einem der Ansprüche 48 oder 49, wobei die Aktivkohle eine spezifische Fläche zwischen 1000 und 2500 $m^2$/g inklusive hat.

**51.** Elektrodenbrei nach einem der Ansprüche 47 bis 50, **dadurch gekennzeichnet, dass** die aktiven Ladungen (2) Übergangsmetalloxide umfassen.

**52.** Elektrodenbrei nach einem der Ansprüche 47 bis 51, **dadurch gekennzeichnet, dass** die aktiven Ladungen (2) Kohlenstoff-Nanoröhrchen umfassen.

**53.** Elektrodenbrei nach einem der Ansprüche 47 bis 52, **dadurch gekennzeichnet, dass** er mindestens einen leitenden Zusatzstoff enthält.

**54.** Elektrodenbrei nach Anspruch 53, **dadurch gekennzeichnet, dass** der leitende Zusatzstoff aus dem Acetylenschwarz, dem Carbonschwarz oder dem Graphit oder einem Gemisch dieser Verbindungen ausgewählt ist.

**55.** Elektrodenbrei nach einem der Ansprüche 53 und 54, **dadurch gekennzeichnet, dass** er mindestens 1,5 Ma% leitenden Zusatzstoff aufweist.

**56.** Elektrodenbrei nach einem der Ansprüche 47 bis 55, **dadurch gekennzeichnet, dass** das Gemisch ein Polymer (1) enthält, das aus der Familie der Fluorpolymere ausgewählt ist.

**57.** Elektrodenbrei nach Anspruch 56, **dadurch gekennzeichnet, dass** das Gemisch Polyvinylidenfluorid (PVDF) in Form von Homopolymer oder Copolymer allein oder in Gemischen enthält.

**58.** Elektrodenbrei nach Anspruch 57, **dadurch gekennzeichnet, dass** das PVDF-Copolymer auf der Basis von Hexafluorpropylen (HFP) oder von Trifluorchlorethylen (CTFE) ist.

**59.** Brei nach Anspruch 58, **dadurch gekennzeichnet, dass** er höchstens 50 % Hexafluorpropylen-Monomer (HFP) oder Trifluorchlorethylen (CTFE), copolymerisiert mit Vinylidenfluorid, umfasst.

**60.** Elektrodenbrei nach einem der Ansprüche 47 bis 59, **dadurch gekennzeichnet, dass** das Gemisch ein Polymer (1) enthält, ausgewählt aus der Familie der Polyether.

**61.** Elektrodenbrei nach Anspruch 60, **dadurch gekennzeichnet, dass** das Gemisch Polyoxyethylen (POE) enthält.

**62.** Elektrodenbrei nach einem der Ansprüche 47 bis 61, **dadurch gekennzeichnet, dass** das Gemisch ein Polymer (1) enthält, ausgewählt aus der Familie der Polyacryle.

**63.** Elektrodenbrei nach Anspruch 62, **dadurch gekennzeichnet, dass** das Gemisch Polymethylmethacrylat (PMMA) oder Polyacrylnitril (PAN) enthält.

**64.** Elektrodenbrei nach einem der Ansprüche 47 bis 63, **dadurch gekennzeichnet, dass** das Gemisch ein Polymer (1) enthält, ausgewählt aus der Familie der Elastomere.

**65.** Elektrodenbrei nach einem der Ansprüche 47 bis 64, **dadurch gekennzeichnet, dass** das Gemisch Polyvinylcopolymer wie Butadien-, Isopropen- oder Styrol- und Acrylcopolymer enthält.

**66.** Elektrodenbrei nach einem der Ansprüche 47 bis 65, **dadurch gekennzeichnet, dass** das Gemisch einen flüssigen Weichmacher (3) enthält, der aus der Familie der Carbonate ausgewählt ist.

**67.** Elektrodenbrei nach Anspruch 66, **dadurch gekennzeichnet, dass** der flüssige Weichmacher (3) aus dem Ethylencarbonat oder dem Propylencarbonat, allein oder in Gemischen, ausgewählt ist.

**68.** Elektrodenbrei nach einem der Ansprüche 47 bis 67, **dadurch gekennzeichnet, dass** flüssige Weichmacher (3) aus dem $\gamma$-Butyrolacton (GBT), dem N-methylpyrrolidon (NMP), dem Tetrahydrofuran (THF), dem Aceton, dem Cyclohexan, dem Dimethylformamid (DMF), dem Acrylnitril, dem Dimethylsulfoxid (DMSO) oder dem Methylethylketon (MEK) allein oder in Gemischen ausgewählt ist.

**69.** Komplex Sammler-Elektrodenbrei für Superkondensator, **gekennzeichnet durch** einen Elektrodenbrei nach einem der Ansprüche 47 bis 68.

**70.** Komplex Sammler-Elektrodenbrei für Superkondensator nach Anspruch 69, **dadurch gekennzeichnet, dass** der Weichmacher des Elektrodenbreis im Brei behalten wird, um die Elektrolytlösungsmittelrolle des Superkondensators zu spielen.

**71.** Komplex Sammler-Elektrode für Superkondensator, dessen Sammler eine Metallfolie ist, **dadurch gekennzeichnet, dass**:

- die Elektrode (6) ein Gemisch umfasst, das mindestens ein Polymerbindemittel auf der Basis von Polyvinylidenfluorid (PVDF) in Form von Homopolymer oder Copolymer allein oder im Gemisch und mindestens eine aktive Ladung (2) mit Ladefaktor von über oder gleich 80 % enthält,
- die Elektrode aus einem Brei in Gelform hergestellt ist mit einem Elastizitätsmodul zwischen $10^4$ und $10^8$ Pascal inklusive, bei Strangpresstemperaturen, in einem Frequenzbereich zwischen 0,01 und 100 Hz inklusive,
- die Elektrode eine Alveolenporosität mit einer spezifischen Fläche über 400 $m^2$/g und einer Porositätsrate über 60 Vol.-% aufweist,
- wobei das Polymerbindemittel der Elektrode in Form einer dispergierten Phase mit Partikel- oder Granulatmorphologie vorliegt, bildend eine diskontinuierliche Matrix.

72. Komplex Sammler-Elektrode für Superkondensator nach Anspruch 71, **dadurch gekennzeichnet, dass** die aktiven Ladungen (2) Aktivkohle umfasse.

73. Komplex Sammler-Elektrode für Superkondensator nach Anspruch 72, **dadurch gekennzeichnet, dass** die Aktivkohle in Form von Pulvern oder von Fasern vorliegt.

74. Komplex Sammler-Elektrode für Superkondensator nach einem der Ansprüche 72 oder 73, **dadurch gekennzeichnet, dass** die Aktivkohle eine spezifische Fläche zwischen 1000 und 2500 $m^2$/g inklusive hat.

75. Komplex Sammler-Elektrode für Superkondensator nach einem der Ansprüche 71 bis 74, **dadurch gekennzeichnet, dass** die aktiven Ladungen (2) Übergangsmetalloxide umfassen.

76. Komplex Sammler-Elektrode für Superkondensator nach einem der Ansprüche 71 bis 75, **dadurch gekennzeichnet, dass** die aktiven Ladungen (2) Kohlenstoff-Nanoröhrchen umfassen.

77. Komplex Sammler-Elektrode für Superkondensator nach einem der Ansprüche 71 bis 76, **dadurch gekennzeichnet, dass** die Elektrode eine Dicke zwischen 80 und 200 $\mu$m inklusive hat.

78. Komplex Sammler-Elektrode für Superkondensator nach einem der Ansprüche 71 bis 77, **dadurch gekennzeichnet, dass** die Elektrode eine Massendichte zwischen 0,5 und 0,9 inklusive hat.

79. Komplex Sammler-Elektrode für Superkondensator nach einem der Ansprüche 71 bis 78, **dadurch gekennzeichnet, dass** die Elektrode eine Massenkapazität über 30 F/g hat.

80. Komplex Sammler-Elektrode für Superkondensator nach einem der Ansprüche 71 bis 79, **dadurch gekennzeichnet, dass** die Elektrode eine Gaspermeabilität über 0,6 mDarcy hat.

81. Komplex Sammler-Elektrode für Superkondensator nach einem der Ansprüche 71 bis 80, **dadurch gekennzeichnet, dass** die Elektrode eine elektrische Leitfähigkeit in Richtung der Dicke über 0,5 Siemens/cm hat.

82. Komplex Sammler-Elektrode für Superkondensator nach einem der Ansprüche 71 bis 81, **dadurch gekennzeichnet, dass** die Elektrode mindestens einen leitenden Zusatzstoff aufweist.

83. Komplex Sammler-Elektrode für Superkondensator nach Anspruch 82, **dadurch gekennzeichnet, dass** der leitende Zusatzstoff aus dem Acetylenschwarz, dem Carbonschwarz oder dem Graphit oder einem Gemisch dieser Verbindungen ausgewählt ist.

84. Komplex Sammler-Elektrode für Superkondensator nach einem der Ansprüche 82 oder 83, **dadurch gekennzeichnet, dass** die Elektrode mindestens 5 Ma% leitenden Zusatzstoff aufweist.

85. Komplex Sammler-Elektrode für Superkondensator nach einem der Ansprüche 71 bis 84, **dadurch gekennzeichnet, dass** der Sammler eine Aluminiumfolie ist.

86. Komplex Sammler-Elektrode für Superkondensator nach einem der Ansprüche 71 bis 85, **dadurch gekennzeichnet, dass** der Sammler eine geätzte Aluminiumfolie ist.

87. Komplex Sammler-Elektrode für Superkondensator nach einem der Ansprüche 71 bis 86, **dadurch gekennzeichnet, dass** der Sammler eine Dicke zwischen 15 und 50 $\mu$m inklusive hat.

88. Komplex Sammler-Elektrode für Superkondensator nach einem der Ansprüche 71 bis 87, **dadurch gekennzeichnet, dass** er eine leitende Unterschicht zwischen dem Sammler und dem Elektrodenmaterial aufweist.

89. Komplex Sammler-Elektrode für Superkondensator nach Anspruch 88, **dadurch gekennzeichnet, dass** die Unterschicht metallisch ist.

90. Komplex Sammler-Elektrode für Superkondensator nach Anspruch 89, **dadurch gekennzeichnet, dass** die Unterschicht von einem Nitrid oder von einer Metallkohlenstoffverbindung gebildet ist.

**91.** Komplex Sammler-Elektrode für Superkondensator nach Anspruch 88, **dadurch gekennzeichnet, dass** die Unterschicht kohlenstoffhaltig ist.

**92.** Komplex Sammler-Elektrode für Superkondensator nach Anspruch 91, **dadurch gekennzeichnet, dass** die kohlenstoffhaltige Unterschicht über 50 Ma% eines kohlenstoffhaltigen leitenden Materials enthält.

**93.** Komplex Sammler-Elektrode für Superkondensator nach einem der Ansprüche 88 bis 92, **dadurch gekennzeichnet, dass** die Unterschicht eine Dicke zwischen 0,1 und 25 $\mu$m inklusive hat.

**94.** Komplex Sammler-Elektrode für Superkondensator nach einem der Ansprüche 88 bis 93, **dadurch gekennzeichnet, dass** die Unterschicht durch Gelstrangpressen hergestellt wird.

**95.** Komplex Sammler-Elektrode für Superkondensator nach einem der Ansprüche 88 bis 93, **dadurch gekennzeichnet, dass** die Unterschicht durch Beschichten, durch Sprühen oder durch Verdampfen auf den Sammler aufgebracht wird.

**96.** Komplex Sammler-Elektrode für Superkondensator, wobei der Sammler eine reine Aluminiumfolie ist, wobei die Elektrode mindestens 70 % Aktivkohle und mindestens ein Bindemittel auf der Basis von Fluorpolymer enthält, **dadurch gekennzeichnet, dass** die Elektrode mindestens 5 Ma% leitenden Zusatzstoff aufweist.

**97.** Komplex Elektrode-Sammler-Elektrode für Superkondensator, **dadurch gekennzeichnet, dass** er einen Komplex Sammler-Elektrode nach den Ansprüchen 71 bis 96 umfasst, wobei die zweite Fläche des Sammlers von einer zweiten Elektrodenschicht mit identischen Merkmalen wie die Elektrodenschicht des Komplexes Sammler-Elektrode bedeckt ist.

**98.** Superkondensator **dadurch gekennzeichnet, dass** er mindestens eine kalanderten Komplex Elektrode-Sammler-Elektrode aufweist, wobei jede Elektrode aufgebracht und danach auf einer metallischen Sammlerfolie gewalzt wird, und wobei:

- jede Elektrode (6) ein Gemisch umfasst, das mindestens ein Polymerbindemittel auf der Basis von Polyvinylidenfluorid (PVDF) in Form von Homopolymer oder Copolymer allein oder im Gemisch und mindestens eine aktive Ladung (2) mit Ladefaktor von über oder gleich 80 % enthält,
- die Elektrode aus einem Brei in Gelform hergestellt ist mit einem Elastizitätsmodul zwischen $10^4$ und $10^8$ Pascal inklusive, bei Strangpresstemperaturen, in einem Frequenzbereich zwischen 0,01 und 100 Hz inklusive,
- die Elektrode eine Alveolenporosität mit einer spezifischen Fläche über 400 m$^2$/g und einer Porositätsrate über 60 Vol.-% aufweist,
- wobei das Polymerbindemittel der Elektroden in Form einer dispergierten Phase mit Partikel- oder Granulatmorphologie vorliegt, bildend eine diskontinuierliche Matrix,
- der Sammler eine Metallfolie einer Dicke zwischen 15 und 50 $\mu$m inklusive ist.

**Claims**

**1.** A process for manufacturing a porous substrate-electrode complex (6) at a charge rate greater than or equal to 80% for a supercondenser comprising at least the steps of:

- preparing a mixture containing at least a polymer (1), at least a liquid porogenic softening agent (3), and at least an active charge (2),
- extruding the mixture in the form of paste, wherein the paste is in the form of gel having an elasticity module of between $10^4$ and $10^8$ Pascal, at extrusion temperatures, in a range of frequencies of between 0.01 and 100 Hz,
- depositing the paste on the substrate and laminating it,

treating the complex thus formed to eliminate all or part of the softening agent (3) and creating porosity in the electrode.

**2.** The process according to claim 1, **characterized in that** the liquid softening agent (3) contained in the mixture is insufficient to completely solubilise the polymer such that the mixture forms a gel during the extrusion process.

**3.** The process according to one of claims 1 or 2, **characterized in that** the electrode mixture is deposited on either side of a substrate.

4. The process according to one of the preceding claims, **characterized in that** the substrate is a current collector consisting of a metallic film.

5. The process according to one of the preceding claims, **characterized in that** the substrate is a current collector aluminium film.

6. The process according to one of the preceding claims, **characterized in that** the substrate is an aluminium film etched in the current collector surface.

7. The process according to one of the preceding claims taken in combination with claim 4, **characterized in that** the collector has a thickness of between 15 and 50 $\mu$m.

8. The process according to one of the preceding claims taken in combination with claim 4, **characterized in that** a conductive sub-layer is present between the collector and the electrode.

9. The process according to claim 8, **characterized in that** the conductive sub-layer is formed by deposit on the metallic film.

10. The process according to one of claims 8 or 9, **characterized in that** the conductive sub-layer is metallic.

11. The process according to one of claims 8 to 10, **characterized in that** the sub-layer consists of a metallic nitride or carbide.

12. The process according to one of claims 8 to 11, **characterized in that** the sub-layer is carbonated.

13. The process according to claim 12, **characterized in that** the carbonated sub-layer contains more than 50% in mass of a conductive carbonated material.

14. The process according to one of claims 8 to 13, **characterized in that** the sub-layer has a thickness of between 0.1 and 25 $\mu$m.

15. The process according to one of claims 8 to 14, **characterized in that** the sub-layer is obtained by gel extrusion.

16. The process according to one of claims 8 to 14, **characterized in that** the sub-layer is deposited by enduction, by pulverisation or by evaporation on the collector.

17. The process according to claims 1 to 3, **characterized in that** the substrate on which the electrode film is deposited is a separator.

18. The process according to one of the preceding claims, wherein the paste is in the form of a gel.

19. The process according to one of the preceding claims, wherein the liquid softening agent (3) is eliminated fully or partially by evaporation.

20. The process according to one of the preceding claims, wherein the liquid softening agent (3) is eliminated fully or partially by solvent.

21. The process according to one of the preceding claims, wherein the active charges (2) comprise active carbon.

22. The process according to claim 21, wherein the active carbon is in the form of powders or fibres.

23. The process according to one of claims 21 or 22, wherein the active carbon has a specific surface of between 1000 and 2500 m$^2$/g.

24. The process according to one of the preceding claims, wherein the active charges (2) comprise oxides of transition metals.

25. The process according to one of the preceding claims, wherein the active charges (2) comprise carbon nanotubes.

26. The process according to one of the preceding claims, wherein at least a conductive additive is added to the mixture.

27. The process according to claim 26, wherein the conductive additive is selected from acetylene black, carbon black or graphite or a mixture of these compounds.

28. The process according to one of the preceding claims, **characterized in that** at least 1.5% in mass of conductive additive is incorporated in the mixture.

29. The process according to one of the preceding claims, wherein the mixture contains a polymer (1) selected from the family of fluoropolymers.

30. The process according to claim 29, wherein the mixture contains polyvinylidene difluoride (PVDF), in the form of homopolymer or copolymer singly or in a mixture.

31. The process according to claim 30, **characterized in that** the PVDF copolymer is based on hexafluoropropylene (HFP) or chlorotrifluoroethylene (CTFE).

32. The process according to claim 31, **characterized in that** it comprises at most 50% of hexafluoropropylene monomer (HFP) or of chlorotrifluoroethylene (CTFE) copolymerised with vinylidene fluoride.

33. The process according to one of the preceding claims, wherein the mixture contains a polymer (1) selected from the family of polyethers.

34. The process according to claim 33, wherein the mixture contains polyoxyethylene (POE).

35. The process according to one of the preceding claims, wherein the mixture contains a polymer (1) selected from the family of polyacrylics.

36. The process according to claim 35, wherein the mixture contains polymethyl methacrylate (PMMA) or of the polyacrylonitrile (PAN).

37. The process according to one of the preceding claims, wherein the mixture contains a polymer (1) selected from the family of elastomers.

38. The process according to one of the preceding claims, wherein the mixture contains a polyvinyl copolymer, such as copolymers of butadiene, isopropene or styrene, and acrylics.

39. The process according to claim 38, **characterized in that** polyvinyl copolymers comprise styrene-butadiene-PMMA (SBM) elastomer ter-polymers or styrene-acrylonitrile (SAN) elastomer copolymers.

40. The process according to one of the preceding claims, wherein the mixture contains a liquid softening agent (3) selected from the family of carbonates.

41. The process according to claim 40, wherein the liquid softening agent (3) is selected from ethylene carbonate or propylene carbonate, singly or in a mixture.

42. The process according to one of the preceding claims, wherein the liquid softening agent (3) is selected from lactones, such as $\gamma$-butyrolactone (GBT), N-methylpyrrolidorie (NMP), tetrahydrofurane (THF), acetone, cyclohexane, dimethylformamide (DMF), acrylonitrile, dimethylsulfoxide (DMSO), or methylethylketone (MEK) singly or in a mixture.

43. The process according to one of the preceding claims, **characterized in that** the extrusion of the mixture is carried out using a dual-screw extruder.

44. The process according to one of the preceding claims, **characterized in that** the extrusion of the mixture is carried out using a continuous mixer.

45. The process according to one of the preceding claims, wherein a calendering step is added after the laminating of the complex.

**46.** The process according to one of the preceding claims, **characterized in that** the electrode film obtained has a thickness of between 80 and 200 $\mu$m.

**47.** An electrode paste (6), for a supercondenser, at a charge rate of between 25% and 45%, comprising a mixture containing at least a polymer (1), at least a liquid softening agent (3), and at least an active charge (2), **characterized in that** the rate of softener in mass is between 50 and 70% and **in that** the paste is in the form of gel having an elasticity module of between $10^4$ and $10^8$ Pascal, at extrusion temperatures, in a range of frequencies of between 0.01 and 100 Hz.

**48.** The electrode paste according to claim 47, **characterized in that** the active charges (2) comprise active carbon.

**49.** The electrode paste according to claim 48, wherein the active carbon is in the form of powders or fibres.

**50.** The electrode paste according to one of claims 48 or 49, wherein the active carbon has a specific surface of between 1000 and 2500 $m^2/g$.

**51.** The electrode paste according to one of claims 47 to 50, **characterized in that** the active charges (2) comprise oxides of transition metals.

**52.** The electrode paste according to one of claims 47 to 51, **characterized in that** the active charges (2) comprise carbon nanotubes.

**53.** The electrode paste according to one of claims 47 to 52, **characterized in that** it contains at least a conductive additive.

**54.** The electrode paste according to claim 53, **characterized in that** the conductive additive is selected from acetylene black, carbon black or graphite or a mixture of these compounds.

**55.** The electrode paste according to one of claims 53 and 54, **characterized in that** it comprises at least 1.5% in mass of conductive additive.

**56.** The electrode paste according to one of claims 47 to 55, **characterized in that** the mixture contains a polymer (1) selected from the family of fluoropolymers.

**57.** The electrode paste according to claim 56, **characterized in that** the mixture contains polyvinylidene difluoride (PVDF), in the form of homopolymer or copolymer, singly or in a mixture.

**58.** The electrode paste according to claim 57, **characterized in that** the PVDF copolymer is based on hexafluoropropylene (HFP) or chlorotrifluoroethylene (CTFE).

**59.** The paste according to claim 58, **characterized in that** it comprises at most 50% of hexafluoropropylene monomer (HFP) or chlorotrifluoroethylene (CTFE) copolymerised with vinylidene fluoride.

**60.** The electrode paste according to one of claims 47 to 59, **characterized in that** the mixture contains a polymer (1) selected from the family of polyethers.

**61.** The electrode paste according to claim 60, **characterized in that** the mixture contains polyoxyethylene (POE).

**62.** The electrode paste according to one of claims 47 to 61, **characterized in that** the mixture contains a polymer (1) selected from the family of polyacrylics.

**63.** The electrode paste according to claim 62, **characterized in that** the mixture contains polymethyl methacrylate (PMMA) or polyacrylonitrile (PAN).

**64.** The electrode paste according to one of claims 47 to 63, **characterized in that** the mixture contains a polymer (1) selected from the family of elastomers.

**65.** The electrode paste according to one of claims 47 to 64, **characterized in that** the mixture contains a polyvinyl copolymer, such as copolymers of butadiene, isopropene or styrene, and acrylics.

66. The electrode paste according to one of claims 47 to 65, **characterized in that** the mixture contains a liquid softening agent (3) selected from the family of carbonates.

67. The electrode paste according to claim 66, **characterized in that** the liquid softening agent (3) is selected from ethylene carbonate or propylene carbonate, singly or in a mixture.

68. The electrode paste according to one of claims 47 to 67, **characterized in that** the liquid softening agent (3) is selected from $\gamma$-butyrolactone (GBT), N-methylpyrrolidone (NMP), tetrahydrofurane (THF), acetone, cyclohexane, dimethylformamide (DMF), acrylonitrile, dimethylsulfoxide (DMSO), or methylethylketone (MEK) singly or in a mixture.

69. A collector-electrode paste complex for a supercondenser, **characterized by** an electrode paste according to any one of claims 47 to 68.

70. The collector-electrode paste complex for a supercondenser, according to claim 69, **characterized in that** the softening agent of the electrode paste is conserved in the paste to act as solvent of the electrolyte of the supercondenser.

71. A collector-electrode complex for a supercondenser, wherein the collector is a metallic film, **characterized in that**:

   - the electrode (6) comprises a mixture which contains at least a polymer bond based on polyvinylidene difluoride (PVDF), in the form of homopolymer or copolymer singly or in a mixture, and at least an active charge (2), at a charge rate greater than or equal to 80%,
   - the electrode is obtained from a paste in the form of gel having an elasticity module of between $10^4$ and $10^8$ Pascal, at extrusion temperatures, in a range of frequencies of between 0.01 and 100 Hz.
   - the electrode has an alveolar porosity having a specific surface greater than 400 m$^2$/g and a rate of porosity greater than 60% in volume,
   - the polymer bond of the electrode is in the form of a dispersed phase of particulate or granular morphology forming a discontinuous matrix.

72. The collector-electrode complex for a supercondenser according to claim 71, **characterized in that** the active charges (2) comprise active carbon.

73. The collector-electrode complex for a supercondenser according to claim 72, **characterized in that** the active carbon is in the form of powders or fibres.

74. The collector-electrode complex for a supercondenser according to one of claims 72 or 73, **characterized in that** the active carbon has a specific surface of between 1000 and 2500 m$^2$/g.

75. The collector-electrode complex for a supercondenser according to one of claims 71 to 74, **characterized in that** the active charges (2) comprise oxides of transition metals.

76. The collector-electrode complex for a supercondenser according to one of claims 71 to 75, **characterized in that** the active charges (2) comprise carbon nanotubes.

77. The collector-electrode complex for a supercondenser according to one of claims 71 to 76, **characterized in that** the electrode has a thickness of between 80 and 200 $\mu$m.

78. The collector-electrode complex for a supercondenser according to one of claims 71 to 77, **characterized in that** the electrode has a mass density of between 0.5 and 0.9.

79. The collector-electrode complex for a supercondenser according to one of claims 71 to 78, **characterized in that** the electrode has a mass capacity greater than 30 F/g.

80. The collector-electrode complex for a supercondenser according to one of claims 71 to 79, **characterized in that** the electrode has permeability to gas greater than 0.6 mDarcy.

**81.** The collector-electrode complex for a supercondenser according to one of claims 71 to 80, **characterized in that** the electrode has electrical conductivity where the thickness is greater than 0.5 Siemens/cm.

**82.** The collector-electrode complex for a supercondenser according to one of claims 71 to 81, **characterized in that** the electrode comprises at least a conductive additive.

**83.** The collector-electrode complex for a supercondenser according to claim 82, **characterized in that** the conductive additive is selected from acetylene black, carbon black or graphite or a mixture of these compounds.

**84.** The collector-electrode complex for a supercondenser according to one of claims 82 or 83, **characterized in that** the electrode comprises at least 5% in mass of conductive additive.

**85.** The collector-electrode complex for a supercondenser according to one of claims 71 to 84, **characterized in that** the collector is an aluminium film.

**86.** The collector-electrode complex for a supercondenser according to one of claims 71 to 85, **characterized in that** the collector is an etched aluminium film.

**87.** The collector-electrode complex for a supercondenser according to one of claims 71 to 86, **characterized in that** the collector has a thickness of between 15 and 50 $\mu$m.

**88.** The collector-electrode complex for a supercondenser according to one of claims 71 to 87, **characterized in that** it comprises a conductive sub-layer between the collector and the electrode material.

**89.** The collector-electrode complex for a supercondenser according to claim 88, **characterized in that** the sub-layer is metallic.

**90.** The collector-electrode complex for a supercondenser according to claim 89, **characterized in that** the sub-layer consists of a metallic nitride or carbide.

**91.** The collector-electrode complex for a supercondenser according to claim 88, **characterized in that** the sub-layer is carbonated.

**92.** The collector-electrode complex for a supercondenser according to claim 91, **characterized in that** the carbonated sub-layer contains more than 50% in mass of a conductive carbonated material.

**93.** The collector-electrode complex for a supercondenser according to any one of claims 88 to 92, **characterized in that** the sub-layer has a thickness of between 0.1 and 25 $\mu$m.

**94.** The collector-electrode complex for a supercondenser according to one of claims 88 to 93, **characterized in that** the sub-layer is obtained by gel extrusion.

**95.** The collector-electrode complex for a supercondenser according to one of claims 88 to 93, **characterized in that** the sub-layer is deposited by enduction, by pulverisation or by evaporation on the collector.

**96.** A collector-electrode complex for a supercondenser, wherein the collector is a film of pure aluminium, wherein the electrode contains at least 70% of active carbon, and at least a bond based on fluoropolymer, **characterized in that** the electrode comprises at least 5% in mass of conductive additive.

**97.** The collector-electrode complex for a supercondenser, **characterized in that** it comprises a collector-electrode complex according to claims 71 to 96, wherein the second face of the collector is covered by a second electrode layer of characteristics identical to the electrode layer of said collector-electrode complex.

**98.** A supercondenser **characterized in that** it comprises at least one calendered electrode-collector-electrode complex wherein each electrode is deposited then laminated on a metallic collector film, and wherein:

- each electrode (6), comprises a mixture which contains at least a polymer bond based on polyvinylidene difluoride (PVDF), in the form of homopolymer or copolymer singly or in a mixture, and at least an active charge (2), at a charge rate greater than or equal to 80%,
- the electrode is obtained from a paste in the form of gel having an elasticity module of between $10^4$ and $10^8$ Pascal, at extrusion temperatures, in a range of frequencies of between 0.01 and 100 Hz,
- the electrode has an alveolar porosity having a specific surface greater than 400 $m^2/g$ and a rate of porosity greater than 60% in volume,
- the polymer bond of the electrodes is in the form of a dispersed phase of particulate or granular morphology forming a discontinuous matrix,
- the collector is a metallic film of a thickness of between 15 and 50 $\mu$m.

po

FIG.1a

FIG.1b

10  20  30  40  50

1+2+3

11  21  4  31  41  42  51

4  6

5  52

5  32

5

33

FIG.2

FIG.3

α

FIG.4

FIG.5

FIG.6

FIG.7a

FIG.7b

FIG.8

FIG.9

FIG.10

FIG.11

FIG.12

FIG_13 : Technologie extrusion-gel

FIG_14 : Technologie extrusion voie sèche (polymère fondu)

FIG_15 : Technologie à base de PTFE

Evolution du module élastique (G') en fonction de la fréquence (w)

Fréquence (W)

FIG_16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020054472 A
- FR 2759087 A
- US 20020093783 A
- US 6327136 B

**Littérature non-brevet citée dans la description**

- **GLENN G. AMATUCCI et al.** An asymmetric Hybrid Nonaqueous Energy Storage Cell. *Journal of The Electrochemical Society,* 2001, vol. 148 (8), A930-A939
- **AURÉLIEN DU PASQUIER et al.** A Nonaqueous Asymmetric Hybrid Li4Ti5O12 / Poly (fluoro phenyl thiophene) Energy Storage Device. *Journal of The Electrochemical Society,* 2002, vol. 149 (3), A302-A306
- Development and characterization of Ni-C Superca-pacitor. *KTH présentée au congrès ESSCAP,* 2004